(19) Europäisches Patentamt / European Patent Office / Office européen des brevets

(11) **EP 4 362 526 A1**

(12) **DEMANDE DE BREVET EUROPEEN**

(43) Date de publication:
**01.05.2024  Bulletin 2024/18**

(21) Numéro de dépôt: **23206236.4**

(22) Date de dépôt: **26.10.2023**

(51) Classification Internationale des Brevets (IPC):
**H04W 16/18** (2009.01)    **H04W 4/02** (2018.01)
**H04W 24/02** (2009.01)

(52) Classification Coopérative des Brevets (CPC):
**H04W 16/18;** H04W 24/02

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **28.10.2022  FR 2211262**

(71) Demandeur: **Orange**
**92130 Issy-les-Moulineaux (FR)**

(72) Inventeurs:
• QIU, Danny
**92326 Châtillon (FR)**
• LAVERGNE, Maxence
**92326 Châtillon (FR)**
• SAMBA, Alassane
**92326 Châtillon (FR)**
• GOURHANT, Yvon
**92326 Châtillon (FR)**

(74) Mandataire: **Vidon Brevets & Stratégie**
**16B, rue de Jouanet**
**BP 90333**
**35703 Rennes Cedex 7 (FR)**

(54) **PROCÉDÉ D ÉVALUATION D'UN DÉPLOIEMENT D'UNE CONFIGURATION CANDIDATE D'UN ÉQUIPEMENT D ACCÈS RADIO D'UN RÉSEAU DE TÉLÉCOMMUNICATIONS, DISPOSITIF, SYSTÈME DE GESTION ET PROGRAMME D ORDINATEUR CORRESPONDANTS**

(57)     L'invention concerne un procédé d'évaluation d'un déploiement d'une configuration candidate, d'au moins un équipement d'accès radio d'un réseau de communication au niveau d'un site, dans une zone géographique, comprenant :
- l'obtention (21) de données réseau historiques dans la zone géographique (ZG), comprenant au moins des informations topographiques relatives à des équipements d'accès radio existants et des mesures d'au moins un indicateur de performance du réseau de communication dans la zone géographique pendant une période de référence ; et
- la détermination (24) d'une métrique d'évaluation de la configuration candidate, ou score (SC), en fonction d'une variation (D_KPI) dudit au moins un indicateur de performances du réseau de communication dans ladite zone géographique, induite par ledit déploiement et d'au moins un critère de priorisation, ladite variation étant prédite au moins à partir des données historiques et d'informations topographiques relatives à la configuration candidate.

Fig. 2

EP 4 362 526 A1

## Description

### Domaine de l'invention

L'invention se situe dans le domaine des télécommunications.

En particulier, l'invention concerne le déploiement de nouvelles ressources radio au niveau d'équipements d'accès radio d'un réseau de télécommunications.

Elle s'applique notamment mais non exclusivement à un réseau de télécommunications mobiles dont l'architecture est conforme à la norme 3GPP (pour « Third Génération Partnership Project », en anglais), dans une de ses versions actuelles ou futures.

### Art antérieur

Afin d'améliorer les performances et la disponibilité d'un réseau de télécommunications mobiles, notamment limiter les situations de congestion et plus généralement améliorer la qualité de service des utilisateurs, un opérateur est régulièrement amené à déployer de nouvelles ressources radio dans le réseau. Par exemple, un tel déploiement comprend l'implantation d'un nouvel équipement d'accès radio sur un nouveau site géographique ce qui va permettre d'augmenter les capacités du réseau dans la zone géographique considérée.

Or, en zone urbaine, déjà très dense, il devient difficile de déployer de nouveaux sites et une solution alternative consiste de plus en plus souvent à déployer une nouvelle configuration d'un équipement radio existant, c'est-à-dire à mettre en service de nouvelles fréquences d'émission/réception (ou cellules radio), voire de nouveaux secteurs d'émission/réception pour une fréquence existante.

Avant de décider d'engager des frais d'investissement et de procéder effectivement au déploiement de cette nouvelle configuration sur le terrain, l'opérateur du réseau aurait besoin d'évaluer l'impact d'une telle évolution de son réseau sur ses performances.

A cet égard, selon la technique connue, un outil logiciel, appelé « Meta Network Insights » (https://www.facebook.com/connectivity/solutions/network-insights) permet d'observer la variation de qualité de service perçue par des utilisateurs de l'application mobile de Facebook avant et après un déploiement d'une nouvelle configuration radio. Un inconvénient de cet outil est qu'il ne fait qu'observer des faits réels, mais ne procure aucune aide à la décision préalablement à la mise à jour d'une architecture de réseau d'accès.

L'invention vient améliorer la situation.

### Exposé de l'invention

A cette fin, l'invention propose un procédé d'évaluation d'un déploiement d'une configuration candidate, d'au moins un équipement d'accès radio d'un réseau de communication au niveau d'un emplacement, dit site, dans une zone géographique comprenant :

- l'obtention de données réseau, dites historiques, relatives à audit réseau dans la zone géographique, lesdites données historiques comprenant au moins des informations topographiques relatives à des équipements d'accès radio existants dans ladite zone géographiques avant le déploiement de la configuration candidate au niveau d'emplacements, dits sites, et des mesures d'au moins un indicateur de performance du réseau de communication dans la zone géographique pendant une période temporelle écoulée, dite période de référence; et
- la prédiction d'une variation dudit au moins un indicateur de performances du réseau de communication dans ladite zone géographique, induite par ledit déploiement, ladite variation étant prédite au moins à partir des données réseau historiques et d'informations topographiques relatives à la configuration candidate, et à partir d'un modèle de prédiction préalablement appris, ledit modèle de prédiction étant mis en oeuvre par un module d'intelligence artificielle configuré pour recevoir comme données d'entrée les données réseau historiques et les informations topographiques de la configuration candidate et produire comme données de sortie la variation dudit au moins un indicateur de performance.

L'invention propose ainsi une approche tout-à-fait nouvelle et inventive de la planification d'un déploiement d'un nouvel équipement d'accès radio ou d'une nouvelle configuration d'un équipement d'accès radio déjà existant dans un réseau de télécommunications, qui consiste à évaluer l'impact d'une évolution du réseau, en utilisant la prédiction d'au moins un indicateur de performances du réseau de communication dans ladite zone géographique, induite par ledit déploiement, à partir d'un modèle de prédiction mis en oeuvre par un module d'intelligence artificielle. Un avantage de recourir à un module d'intelligence artificielle est de profiter de sa puissance de traitement et d'intégration d'une quantité de données très importante et de sa capacité, une fois entraîné, à produire des résultats fiables, précis et reproductibles.

Selon un premier mode de réalisation de l'invention, le modèle de prédiction est configuré pour prédire les valeurs d'au moins un indicateur de performance après le déploiement de la configuration candidate, qui sont ensuite exploitées pour déterminer une variation de cet indicateur par comparaison avec les valeurs historiques de l'indicateur de performances (relevées pendant la période de référence, avant le déploiement de la configuration candidate), ou bien selon un deuxième mode de réalisation, le modèle de prédiction produit directement une variation ou un taux de variation des valeurs de cet indicateur de performances entre avant et après le déploiement.

Dans un mode particulier de réalisation, le procédé peut comprendre la détermination d'une métrique d'évaluation de la configuration candidate, ou score, en fonction de ladite variation d'un indicateur de performances du réseau et d'au moins un critère de priorisation associé à une métrique représentative d'une évolution d'une performance du réseau induite par ledit déploiement, le score étant obtenu par application dudit au moins un critère de priorisation à la variation de l'indicateur de performance prédite.

Cette détermination d'une métrique représentative d'une évolution des performances du réseau induites par ce déploiement dans une zone géographique englobant l'emplacement du site, en fonction d'au moins un critère de priorisation, permet de traduire en termes de métrique une politique de l'opérateur du réseau.

Par exemple, un critère de priorisation peut être de favoriser une configuration candidate qui a un impact positif sur les performances de toutes les cellules du site concerné ou, en variante sur la seule bande de fréquences de 800 MHz. La politique d'un opérateur peut être par exemple d'acter un déploiement sur un site, lorsque l'évolution des performances engendrée par le déploiement candidat est positif pour toutes les fréquences radio ou, en variante, positive pour la seule bande de fréquences de 800 MHz.

Selon encore un autre aspect, le procédé comprend en outre

- la construction à partir des données réseau historiques, d'une table de données, dite de performances du réseau dans la zone géographique ;
- la construction d'une table de données d'entrées destinées à être présentées audit module d'intelligence artificielle, à partir de la table de performances, des données topographiques relatives à la configuration candidate et de données externes historiques comprenant des données démographiques et cartographiques de la zone géographique

une table de données de sortie étant produite par le module d'intelligence artificielle, comprenant au moins des valeurs prédites de la variation dudit au moins un indicateur de performance du site induite par le déploiement de la configuration candidate.

Un avantage est de fournir au module d'intelligence artificielle une table fusionnée de données d'entrée de types variés à partir de laquelle il va résoudre un problème de régression pour fournir au moins une valeur continue par indicateur de performances.

Selon un autre aspect de l'invention, le procédé comprend :

- l'obtention des données externes historiques ; et
- la modélisation d'une zone géographique desservie par ledit au moins un site, dite zone de couverture radio, à partir desdites données réseau historiques et des données externes historiques,

la zone de couverture radio dudit au moins un site étant prise en compte pour la détermination (24) d'une évaluation du déploiement de la configuration candidate.

Un avantage d'enrichir les données prises en compte pour l'évaluation et donc améliorer cette évaluation.

Selon encore un autre aspect de l'invention, le procédé comprend la construction, à partir des données externes historiques obtenues dans la zone de couverture radio, d'une deuxième table de données, dite de tissu urbain de la zone de couverture du site, ladite table de données d'entrées étant construite par fusion de la table de performances, des données topographiques relatives à la configuration candidate et de la table de tissu urbain.

De la sorte, on croise différents types d'informations dans une seule table de données d'entrées, ce qui facilite l'exploitation des données en vue de l'évaluation.

Selon un autre aspect de l'invention, le procédé comprend, dans une phase préalable :

- l'obtention de données réseau d'apprentissage, relatives à au moins un site d'un réseau de communication dans une zone géographique, pendant une période temporelle écoulée, dite période d'apprentissage, au cours de laquelle au moins une nouvelle configuration a été déployée sur ledit au moins un site, lesdites données réseau d'apprentissage comprenant au moins des informations topographiques relatives à une configuration précédente et à la nouvelle configuration dudit au moins un site et des mesures d'au moins un indicateur de performance du site;
- la construction à partir des données réseau d'apprentissage, d'une première table de données, dite table d'évolution des performances du site avant et après le déploiement de ladite au moins une nouvelle configuration ;

- l'obtention de données externes d'apprentissage comprenant des données démographiques et cartographiques de la zone géographique, pour la période d'apprentissage ;

- la modélisation d'une zone géographique d'une zone géographique desservie par ledit au moins un site, dite zone de couverture radio d'apprentissage, à partir desdites données réseaux d'apprentissage ;
- la construction, à partir des données externes d'apprentissage dans la zone de couverture radio d'apprentissage, d'une deuxième table de données, dite table de tissu urbain d'apprentissage de la zone de couverture du site ;
- la construction d'un premier ensemble de données d'apprentissage par fusion de la table d'évolution des performances et de la table de tissu urbain d'apprentissage ; et
- l'entraînement du module d'intelligence artificielle à partir du premier ensemble d'apprentissage, ledit modèle de prédiction étant obtenu.

Un avantage de l'invention est qu'elle s'appuie sur des données d'apprentissage enrichies, qui croisent différents types d'informations.

La prise en compte d'informations relatives au tissu urbain dans la zone de couverture des sites de la zone géographique dont les données d'apprentissage sont issues, permet d'améliorer la précision du modèle de prédiction.

Un autre avantage est qu'elles incluent des déploiements effectifs de nouvelles configurations pour le réseau considéré. Les données réseau d'apprentissage peuvent être collectées par l'opérateur du réseau de communication pour lequel un déploiement de nouvelles ressources est envisagé ou issues d'un autre réseau.

Selon encore un autre aspect de l'invention, la période d'apprentissage comprend au moins une première période de comparaison, une période de déploiement postérieure à la première période et une deuxième période de comparaison postérieure à la période de déploiement et en ce que la construction de la table d'évolution des performances comprend une comparaison des valeurs dudit au moins un indicateur de performance obtenues pendant la première et la deuxième périodes de comparaison.

Un avantage est de mesurer l'impact réel d'une nouvelle configuration déployée pendant la période d'apprentissage, sur les performances d'un réseau de télécommunications et d'exploiter cette connaissance pour prédire automatiques celui d'une configuration candidate pour un site donné.

Avantageusement, pour éviter les effets de saisonnalité, on considère des périodes temporelles de comparaison suffisamment longues, par exemple d'un an chacune et on compare les valeurs d'indicateurs d'un mois M donné de la première période avec le même mois de la deuxième période. Cela évite d'introduire des biais dus à des événements démographiques ou socio-économiques saisonniers, comme par exemple la forte mobilité géographique des utilisateurs pendant la période estivale.

Selon un autre aspect de l'invention, le procédé comprend :

- la construction d'un deuxième ensemble de données d'apprentissage, dit ensemble témoin, obtenu à partir de données réseau d'apprentissage pour au moins un autre site du réseau ou d'un autre réseau appartenant à la même zone géographique et pour lequel aucune nouvelle configuration n'a été déployée pendant la période d'apprentissage, et

ledit module d'intelligence artificielle est entraîné à partir du premier et du deuxième ensembles de données d'apprentissage.

Un avantage de recourir à un ensemble témoin est d'éviter les biais due à une évolution « naturelle » du réseau, liée notamment à une évolution du nombre d'abonnés à ce réseau.

Selon encore un autre aspect de l'invention, le procédé est mis en oeuvre pour une pluralité de de configurations candidates dans ledit réseau de communication (et il comprend en outre le classement de la pluralité de déploiements en fonction des scores déterminés.

Avec l'invention, plusieurs projets de déploiements de configurations candidates sur un ou plusieurs sites peuvent être évalués et mis en compétition.

Dans ce cas, le module d'intelligence artificielle est configuré pour résoudre un problème de régression multi-cibles et prédire une valeur continue par indicateur de performance pour plusieurs configurations candidates (donc plusieurs bandes de fréquences ou plusieurs secteurs).

Avantageusement, un arbitrage est ensuite réalisé sur la base des scores obtenus par les différents projets. La solution de l'invention pourrait être exploitée par des équipes techniques et/ou géomarketing d'un opérateur de réseau de télécommunication pour planifier de façon optimale les nouveaux déploiements à mettre en oeuvre dans son réseau.

Il est envisagé aussi de mettre en compétition plusieurs configurations candidates pour un même site.

Selon encore un autre aspect de l'invention, ledit site comprenant au moins une cellule radio configurée pour émettre et recevoir des ondes radio à une fréquence donnée dans au moins un secteur donné, ladite au moins une configuration candidate appartient à un groupe comprenant au moins :

- l'ajout d'une cellule radio associée à une fréquence distincte des fréquences existantes sur ledit site ;
- l'ajout d'un secteur d'émission à une cellule radio existante,
- le remplacement d'une cellule radio existante associée à une première fréquence par une nouvelle cellule radio associée à une deuxième fréquence distincte de la première,
- le remplacement d'une cellule radio associée à une première technologie par une cellule radio associée à une deuxième technologie.

Les configurations candidates pour un site donné peuvent être de types variés, ce qui permet d'ajuster le déploiement de nouvelles ressources radio aux besoins spécifiques d'une zone géographique. Il peut s'agir d'ajouter de nouveaux secteurs à une cellule radio existantes, une nouvelle cellule radio, de remplacer une cellule radio de technologie plus ancienne, par une cellule radio de technologie plus récente, etc.

L'invention concerne également un dispositif d'évaluation d'un déploiement d'une configuration candidate, d'au moins un équipement d'accès radio d'un réseau de communication au niveau d'un emplacement, dit site, dans une zone géographique, configuré pour mettre en oeuvre :

- l'obtention de données réseau, dites historiques, relatives à audit réseau dans la zone géographique, lesdites données historiques comprenant au moins des informations topographiques relatives à des équipements d'accès radio existants dans ladite zone géographiques avant le déploiement de la configuration candidate au niveau d'emplacements, dits sites, et des mesures d'au moins un indicateur de performance du réseau de communication dans la zone géographique pendant une période temporelle écoulée, dite période de référence; et
- la détermination d'une métrique d'évaluation de la configuration candidate, ou score, en fonction d'une variation dudit au moins un indicateur de performances du réseau de communication dans ladite zone géographique, induite par ledit déploiement et d'au moins un critère de priorisation associé à une métrique représentative d'une évolution d'une performance du réseau induite par ledit déploiement, ladite variation étant prédite au moins à partir des données réseau historiques et d'informations topographiques relatives à la configuration candidate.

Avantageusement, ledit dispositif est configuré pour mettre en oeuvre les étapes du procédé d'évaluation du déploiement d'une configuration candidate tel que décrit précédemment.

Avantageusement, ledit dispositif est intégré dans un système de gestion d'un réseau de télécommunications.

Le système présente au moins les mêmes avantages que ceux conférés par le procédé d'évaluation précité.

L'invention concerne également un produit programme d'ordinateur comprenant des instructions de code de programme pour la mise en oeuvre du procédé d'évaluation tel que décrit précédemment, lorsqu'il est exécuté par un processeur.

Un programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré le programme d'ordinateur comprenant des instructions de code de programme pour l'exécution des étapes du procédé selon l'invention tel que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile (carte mémoire) ou un disque dur ou un SSD.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé précité.

Selon un exemple de réalisation, la présente technique est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, settop-box, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

Par la suite, on entend par ressources tous ensembles d'éléments matériels et/ou logiciels support d'une fonction ou d'un service, qu'ils soient unitaires ou combinés.

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (« firmware » en anglais), etc.

Chaque composante du système précédemment décrit met bien entendu en oeuvre ses propres modules logiciels.

Les différents modes de réalisation mentionnés ci-dessus sont combinables entre eux pour la mise en oeuvre de la présente technique.

**Brève description des dessins**

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] illustre de façon schématique un exemple d'architecture d'un système de gestion d'un réseau de télécommunications mobiles mis en oeuvre selon un mode de réalisation de l'invention ;
[Fig. 2] décrit sous forme d'un logigramme les étapes d'un procédé d'évaluation d'un déploiement d'une configuration candidate d'un site dans un réseau de télécommunications, selon un exemple de réalisation de l'invention ;
[Fig. 3] détaille une phase d'apprentissage d'un modèle de prédiction mis en oeuvre par le procédé d'évaluation selon un exemple de réalisation de l'invention ;
[Fig. 4] illustre un exemple de période temporelle d'apprentissage pendant laquelle les données d'apprentissage sont obtenues, comprenant une sous-période de déploiement ;
[Fig. 5] illustre un exemple de carte de tissu urbain obtenue par fusion d'une carte des zones de couverture radio associées aux sites d'un réseau de communication et des données topographiques et démographiques dans une zone géographique ;
[Fig. 6] illustre de façon schématique l'obtention de sous-polygones pour les secteurs d'un site à partir du polygone de Voronoï du site ;
[Fig.7A] illustre de façon schématique la phase d'apprentissage d'un modèle de prédiction mis en oeuvre par un module d'intelligence artificielle selon un mode de réalisation de l'invention ;
[Fig. 7B] illustre de façon schématique la phase de test d'un modèle de prédiction préalablement appris selon un mode de réalisation de l'invention ;
[Fig. 8] détaille de façon schématique la phase de production d'une prédiction d'une variation d'au moins un indicateur de performances du réseau de communication par le module d'intelligence artificielle, induite par le déploiement de la au moins une configuration candidate, selon un mode de réalisation de l'invention ;
[Fig. 9] décrit de façon schématique un exemple de mise en application du procédé d'évaluation d'une nouvelle configuration d'un site pour arbitrer entre plusieurs configurations candidates selon un mode de réalisation de l'invention ;
[Fig. 10] illustre de façon schématique un exemple de classement des configurations candidates produit par l'invention selon ce mode de réalisation ; et
[Fig. 11] décrit un exemple de structure matérielle d'un dispositif d'évaluation d'au moins un déploiement d'une configuration candidate selon l'invention.

**Description de l'invention**

Le principe de l'invention consiste en l'évaluation d'un déploiement candidat de nouvelles ressources d'accès radio d'un réseau de communication à un emplacement géographique donné, dite site, basée sur la prédiction d'un indicateur de variation des performances du réseau induites par le déploiement candidat à partir de données historiques relatives au réseau de communication dans la zone géographique et la détermination d'un score à partir de cet indicateur et en fonction d'un ou plusieurs critères de priorisation.

Le déploiement candidat peut concerner l'implantation d'un nouvel équipement d'accès radio à une position géographique donnée ou bien la mise en service d'une nouvelle configuration sur un équipement d'accès radio déjà déployé. Cette nouvelle configuration peut consister en l'ajout d'une nouvelle cellule radio ou d'un ou plusieurs nouveaux secteurs à une cellule radio déjà déployée. Elle peut comprendre aussi le remplacement d'une cellule radio associée à une technologie donnée par une cellule radio associée à une technologie plus récente.

L'invention s'applique à tout type de réseau de communication comprenant un ou plusieurs réseaux d'accès radio. Elle trouve une application avantageuse dans un réseau de télécommunications mobiles dont l'architecture est conforme à la norme 3GPP dans une de ses versions actuelles ou futures.

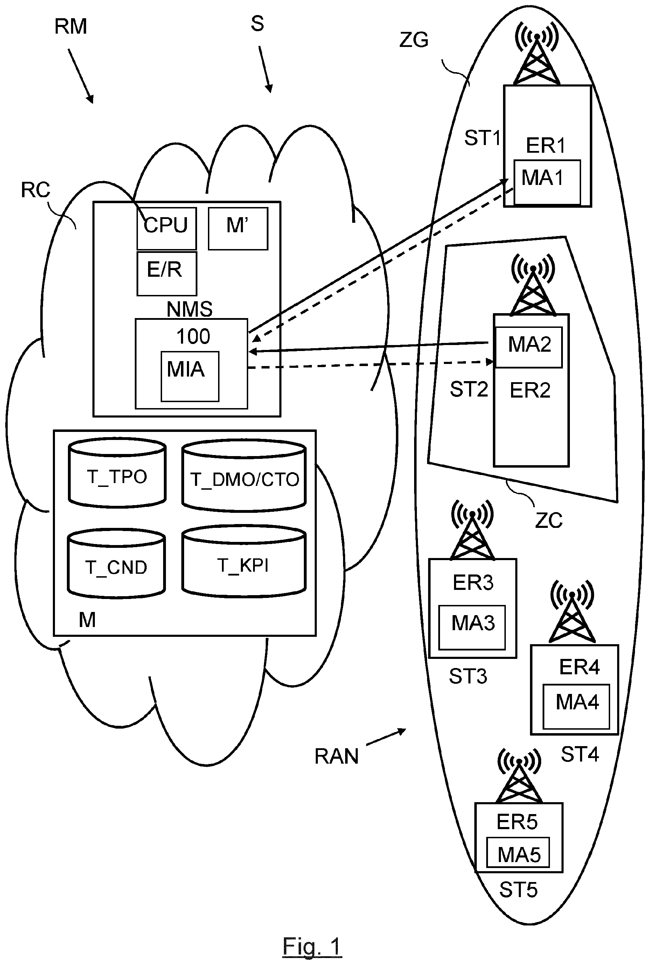

En relation avec la figure 1, on présente à titre illustratif un exemple simplifié d'architecture d'un réseau de télécommunication mobile RM dans lequel se situe l'invention. Il comprend un réseau coeur RC et un réseau d'accès radio RAN. Le réseau d'accès radio comprend plusieurs équipements d'accès radio ER1-ER5 localisés à l'intérieur d'une zone géographique ZG. Il s'agit par exemple de stations de base équipées d'une ou plusieurs antennes radio (non représentées).

Dans la suite, on désigne par zone de couverture, une zone géographique à l'intérieur de laquelle des terminaux utilisateurs configurés pour se connecter au réseau mobile RM, peuvent s'attacher à la station de base, c'est-à-dire qu'ils sont à portée radio de cette station de base et peuvent communiquer par voie radio avec elle. Sur la figure 1, on a représenté la zone de couverture ZC associée à l'équipement d'accès radio ER2, sous la forme d'un polygone en référence à la technique de Voronoï, connue en soi, pour modéliser une telle zone de couverture.

L'invention s'applique à tout type de réseau de télécommunications mobiles, dont l'architecture est conforme par exemple à la norme 3GPP dans une de ses versions actuelles ou futures.

Sur la figure 1, le réseau coeur comprend un équipement de gestion NMS (en anglais, « Network Management System »), configuré pour collecter des données de mesure de performances du réseau en provenance de modules ou agents de gestion MA1-MA5 (en anglais, « Management Agent ») placés en différentes positions du réseau d'accès radio RAN, par exemple sur les sites des équipements d'accès radio ER1-ER5 voire même, intégrés dans ces équipements d'accès radio. De façon connue en soi, un tel équipement NMS fournit généralement des fonctionnalités, dites FACPS, de surveillance des performances pour l'ensemble du réseau (en anglais, « Fault, Configuration, Accounting, Performance, Security », soit « Défaut, Configuration, Comptabilité, Performance, Sécurité »).

La figure 1 illustre de façon schématique un exemple d'architecture d'un système S pour la gestion des ressources du réseau de communication, selon un mode de réalisation de l'invention. Selon ce mode de réalisation de l'invention, le système S comprend l'équipement de gestion NMS et les agents de gestion MA1-MA5.

Selon l'invention, le système S comprend aussi un dispositif 100 d'évaluation d'un déploiement d'une configuration candidate d'un équipement d'accès radio du réseau de communication RAN, configuré pour obtenir des données relatives audit réseau dans une zone géographique, par exemple ZG, comprenant le site de l'équipement d'accès radio, dites données réseau historiques, comprenant des données réseau comprenant au moins des informations topographiques relatives à des équipements d'accès radio existants dans ladite zone géographique avant le déploiement de la configuration candidate, et des mesures d'au moins un indicateur de performances du réseau de communication dans la zone géographique pendant une période temporelle écoulée, dite période de référence. Le dispositif 100 est en outre configuré pour déterminer une métrique d'évaluation du déploiement candidat, ou score, en fonction d'une variation dudit au moins un indicateur de performances du réseau de communication dans ladite zone géographique, induite par ledit déploiement candidat et d'au moins un critère de priorisation associé à une métrique représentative d'une évolution d'une performance du réseau induite par ledit déploiement, ladite variation étant prédite à partir des données historiques et d'informations topographiques relatives à la configuration candidate.

Avantageusement, le dispositif d'évaluation 100 obtient les informations topographiques du réseau d'accès RAN d'une table de données T_TPO stockée dans la mémoire M ou une autre mémoire du réseau coeur RC. Il obtient les mesures d'indicateurs de performances KPI du réseau d'accès radio RAN (au moins dans la zone géographique ZG) d'une table de données T_KPI, stockée dans la mémoire M ou dans une autre mémoire du réseau coeur RC. Au moins une partie d'entre elles a été préalablement collectée par les agents de gestions MA1-MA5. On suppose qu'il obtient les informations topographiques relatives à la configuration candidate d'une table de données T_CND stockée dans la mémoire M ou dans une autre mémoire du réseau coeur RC. Selon un mode de réalisation de l'invention, il obtient des données externes au réseau, ou contextuelles, comprenant au moins des informations démographiques et cartographiques de la zone géographique ZG d'une table de données T_DMO, par exemple stockée dans la mémoire M du réseau coeur RC. Bien sûr, l'invention n'est pas limitée à cet exemple d'implémentation, plusieurs mémoires et plusieurs tables de données peuvent être utilisées pour stocker les différentes informations dont le dispositif de déploiement 100 a besoin.

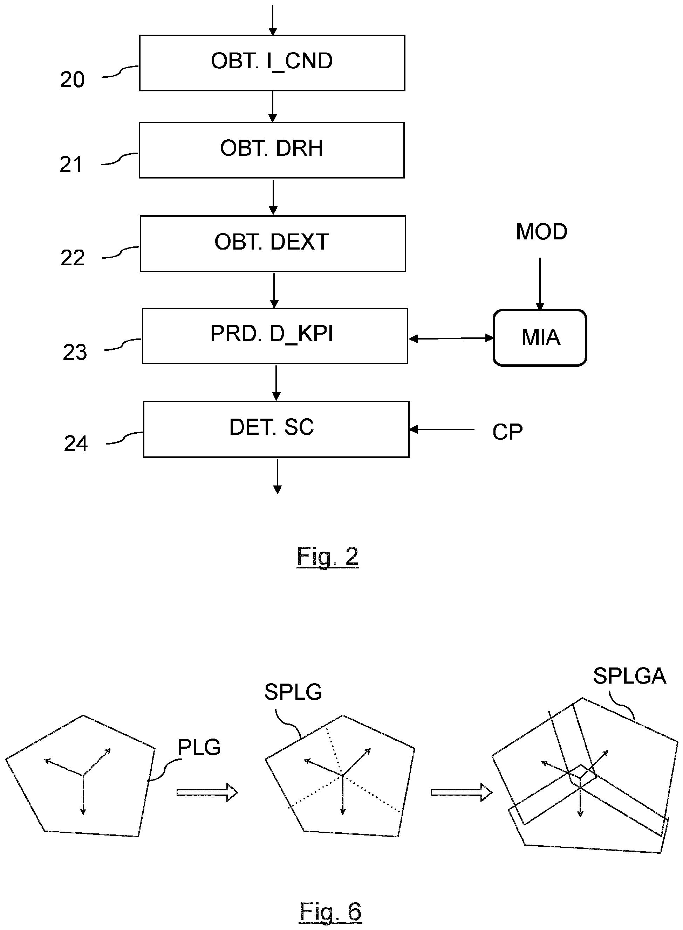

Le dispositif 100 met ainsi en oeuvre le procédé d'évaluation d'un déploiement d'une configuration candidate dans un réseau de communication selon l'invention qui sera détaillé ci-après en relation avec la figure 2.

Avantageusement, l'équipement de gestion NMS présente la structure matérielle d'un ordinateur et comprend un processeur CPU, une mémoire M' dans laquelle sont par exemple stockés des programmes d'ordinateur, ainsi qu'un module d'émission/réception E/R qui lui permet de communiquer avec d'autres équipement du réseau RC. Alternativement, le dispositif 100 peut être indépendant de l'équipement de gestion NMS, mais connecté à celui-ci par une liaison quelconque, filaire ou non. Par exemple, il peut être colocalisé avec l'équipement de gestion NMS ou intégré dans un autre équipement du réseau coeur RC ou encore dans une entité spécifique du réseau coeur RC. Par exemple, il peut être mis en oeuvre sous la forme d'une fonction virtualisée.

On présente désormais, en relation avec la figure 2, sous une forme de logigramme un exemple de mise en oeuvre d'un procédé d'évaluation d'un déploiement d'au moins une nouvelle configuration dans un réseau de télécommunications, ici le réseau mobile RM, selon l'invention. Ce procédé est mis en oeuvre par le dispositif 100 précité.

Dans ce qui suit, ces ressources concernent un équipement d'émission/réception d'ondes radio dans une ou plusieurs des fréquences allouées au réseau mobile RM. Plus précisément, on désigne par cellule un équipement d'émission/réception radio comprenant une ou plusieurs antennes configurées pour émettre et recevoir à une de ces fréquences. Pour la norme 4G, par exemple, les fréquences d'émission sont 700MHz, 800MHz, 1800MHz, 2100MHz et 2600MHz. Pour une cellule donnée, les antennes sont déployées pour émettre dans différentes directions définies par un azimut, correspondant chacun à un secteur.

On désigne généralement par site un emplacement géographique d'une ou plusieurs cellules radio. L'ensemble des cellules regroupées sur un même site ST1-ST5 constitue un équipement d'accès radio tels que ceux ER1-ER5 décrits en relation avec la figure 1.

- Selon l'invention, on désigne au sens large par déploiement d'une nouvelle configuration de ressources d'accès radio :

  - le déploiement d'une ou plusieurs nouvelles cellules radio sur un site existant,
  - le déploiement d'une ou plusieurs nouvelles cellules radio sur un nouveau site,
  - l'ajout d'un ou plusieurs secteurs supplémentaires à une ou plusieurs cellules radio existantes,
  - le remplacement d'une ou plusieurs cellule radio existantes associées à une technologie par une ou plusieurs cellules radio associées à une technologie plus récente.

On emploie généralement le terme de configuration existante de secteur ou de configuration existante de site pour désigner l'ensemble des secteurs ou l'ensemble des fréquences de cellules qui sont installées, donc déjà déployées, sur un site. De façon similaire, une configuration candidate désigne l'ensemble des fréquences qu'on envisage de déployer sur un ou plusieurs secteurs d'une configuration existante d'un site existant ou sur un nouveau site.

Dans ce qui suit, la zone géographique ZG désigne la zone dans laquelle le déploiement de la configuration candidate est envisagé. A titre d'exemple, elle englobe un ou plusieurs quartiers, un ou plusieurs départements, voire une région administrative.

En 20, des informations relatives à au moins une configuration candidate sont obtenues. Il s'agit d'informations topologiques de la configuration candidate, en termes de fréquence(s) (ou cellules), d'azimut(s) (ou secteurs) et de technologies (3G, 4G, 5G etc). Ces informations sont par exemple stockées dans la table de données T_CND. Elles concernent par exemple le site ST2.

En 21, des informations historiques DRH relatives au réseau d'accès radio RAN dans la zone géographique ZG comprenant le site ST2 sont obtenues. Il s'agit d'une part de données temporelles dont dispose l'opérateur du réseau mobile RM, qui sont remontées par les équipements d'accès radio ER1-ER5 et collectées par les agents de gestion MA1-MA5, et d'autre part de données statiques relatives à la topologie /configuration existante du réseau d'accès radio RAN dans la zone géographique ZG.

Les données temporelles relatives au réseau dans la zone géographique comprennent des valeurs d'un ou plusieurs indicateurs de performances du réseau de communication sur une période temporelle écoulée, ou période de référence.

Dans la suite, on désigne par cette notion d'indicateur de performances toute information pertinente pour mesurer un niveau de performances du réseau de communication dans la zone géographique desservie par l'équipement d'accès radio considéré. Sans perte de généralité, il s'agit par exemple d'informations relatives à :

- un débit de données de communication descendant, de l'équipement d'accès vers l'équipement terminal ;
- un nombre d'équipements terminaux connectés à l'équipement d'accès ;
- un volume global de trafic de données dans la zone géographique ;
- un niveau d'utilisation d'unités de ressources matérielles ou logicielles de l'équipement d'accès, par exemple d'unités de ressources fréquentielles PRB (de l'anglais « Physical Resource Blocks) par une station de base d'un réseau de télécommunications mobiles ; ou
- d'un volume de données échangées pour un type de service ou une classe de service donnée ; ou encore

d'un volume de ressources énergétiques consommées par l'équipement d'accès.

On parle communément d'indicateur clé de performances KPI (ou « Key Performance Indicator », en anglais). Il s'agit de données réseau historiques, au sens où elles ont été collectées pendant une période temporelle écoulée, dite période de référence, avec une granularité temporelle qui peut varier selon les besoins : sous-horaire, horaire, quotidienne. On note que la période de référence compte avantageusement au moins une année.

Les données statiques comprennent des informations topographiques des sites existants et renseignent notamment sur :

- la position géographique des cellules,
- leur(s) secteur(s) avec le(s) azimut(s) associés,
- la bande de fréquences,
- la technologie,
- la date de mise en service,
- etc.

En 22, des informations externes DEXT au réseau mobile et relatives à un contexte de déploiement des ressources d'accès radio dans la zone géographique ZG, sont obtenues. Typiquement, il s'agit de données externes cartographiques, démographiques et socio-économiques. Elles décrivent le tissu urbain à proximité du site dans lequel le déploiement candidat est envisagé. En effet, l'impact du déploiement de nouvelles cellules sur un site donné dépend fortement de l'activité humaine à proximité de ce site. Ces données peuvent être publiques ou privées. Par exemple, les données cartographiques sont issues d'une base de données publique appelée « OpenStreetMap », les données démographiques et socio-économiques sont des données carroyées fournies par l'Insee et les données sur la répartition de la population proviennent d'une base de données appelées « Humanitarian Data Exchange » (fournies par Meta©).

En 23, une variation d'au moins un des dits indicateurs de performances D_KPI à la suite du déploiement est prédite dans la zone géographique ZG à partir des données réseau historiques DRH, des données externes DEXT et des informations topographiques I_CND relatives à la configuration candidate.

Avantageusement cette prédiction 23 est réalisée par un module d'intelligence artificielle MIA qui met en oeuvre un modèle de prédiction préalablement appris à l'aide de données d'apprentissage et d'une technique d'apprentissage machine (en anglais, « Machine Learning »). Selon un premier mode de réalisation de l'invention, le modèle de prédiction MOD est configuré pour prédire des valeurs d'au moins un indicateur de performances après le déploiement. La variation est ensuite obtenue par comparaison des valeurs prédites avec les valeurs historiques du ou des indicateurs. Selon un deuxième mode de réalisation de l'invention, la variation de l'indicateur est directement prédite. Un exemple de réalisation sera détaillé ci-après.

En 24, une métrique d'évaluation de la configuration candidate, ou score SC, est déterminée, en fonction de la variation prédite et d'au moins un critère de priorisation CP. Un exemple de réalisation sera détaillé ci-après.

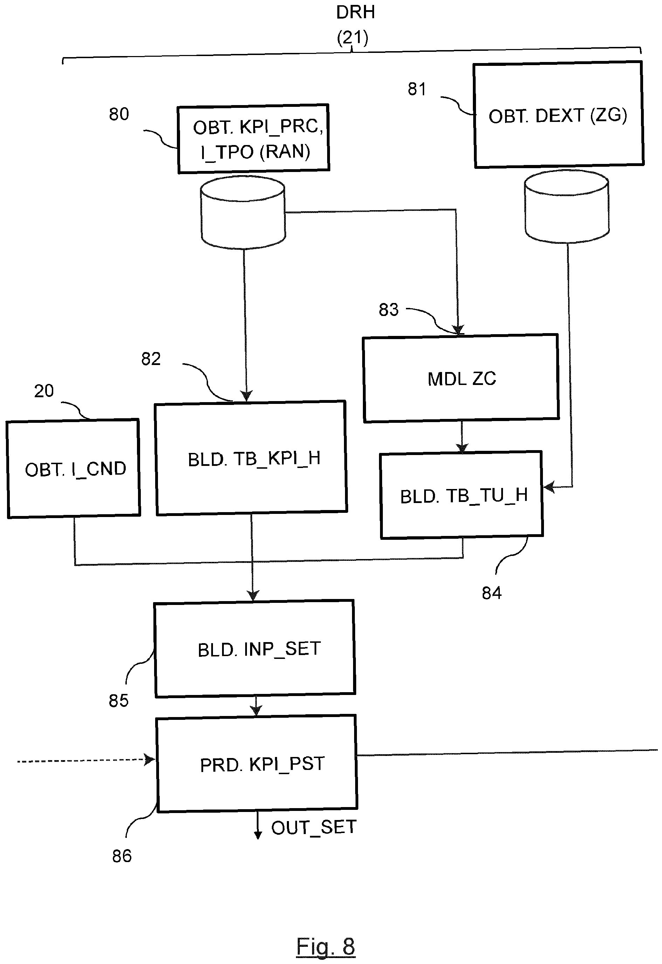

Le procédé d'évaluation qui vient d'être présenté peut avantageusement être mis en application pour arbitrer entre plusieurs configurations candidates associées à un ou plusieurs sites du réseau d'accès radio. Dans ce cas, les étapes 20 à 23 qui viennent d'être mises en oeuvre pour chaque configuration candidate et les scores obtenus pour chacune d'elles sont classés de sorte qu'une décision de déploiement puisse être prise sur la base de ce classement. Un exemple de réalisation sera détaillé en relation avec la figure 8.

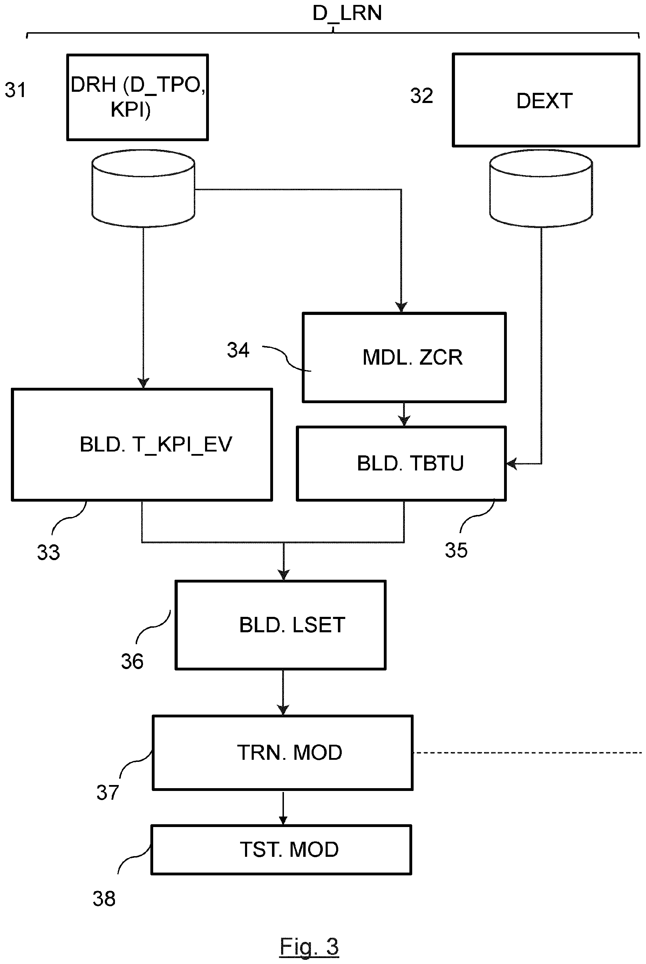

On décrit maintenant en relation avec la figure 3 un exemple de mise en oeuvre d'une phase d'apprentissage ou d'entrainement du modèle de prédiction MOD. Cette phase d'apprentissage est préalable à la mise en oeuvre du procédé d'évaluation décrit en relation avec la figure 2.

Pour cet apprentissage, on considère un ensemble de données de données d'apprentissage D_LRN comprenant des données historiques DRH relatives à un réseau mobile pendant une période temporelle écoulée, appelée période d'apprentissage, et des données externes DEXT relatives à un contexte de ce réseau dans la zone géographique considérée. Dans cet exemple, on considère qu'il s'agit des mêmes types de données que celles précédemment décrites en relation avec les étapes 21, 22 et 23 de la figure 2. En particulier, on suppose qu'il s'agit des mêmes indicateurs de performances KPI. En revanche, s'il s'agit généralement du même réseau mobile pour des questions évidentes de praticité (l'opérateur peut exploiter les données qu'il a lui-même collectées), les données d'un autre réseau mobile pourraient tout-à-fait être exploitées. Quant à la zone géographique utilisée pour l'apprentissage, elle peut coïncider ou non avec la zone géographique ZG dans laquelle le déploiement est envisagé, mais elle est généralement au moins aussi vaste voire plus étendue. Par exemple, la zone géographique utilisée pour l'apprentissage compte une ou plusieurs régions administratives, voire un pays.

Ainsi, les sites considérés pour l'apprentissage peuvent être identiques ou distincts de ceux concernés par la configuration candidate et les données externes décrivant le tissu urbain ne correspondent pas forcément à celles de la zone géographique considérée pour le déploiement de la configuration candidate.

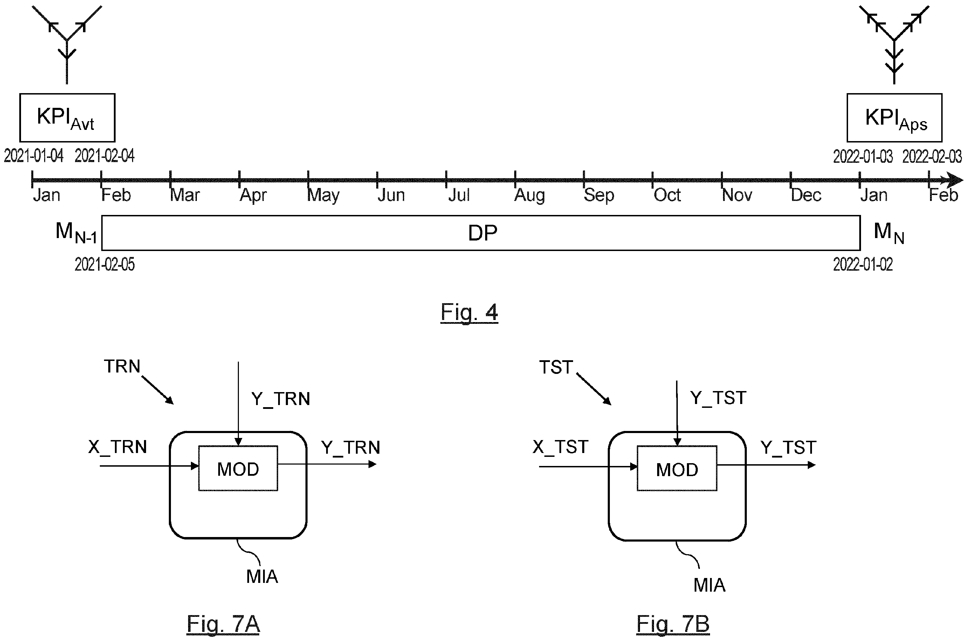

Un avantage est de permettre de collecter un plus grand nombre de données d'apprentissage et de donner plus de généricité au modèle de prédiction qui sera obtenu. Une caractéristique importante de cet ensemble de données d'apprentissage est qu'il doit nécessairement avoir été acquis sur une période temporelle comprenant une période de déploiement, c'est-à-dire au cours de laquelle des déploiements de nouvelles configurations ont eu lieu dans la zone géographique auxquelles les données d'apprentissage se rapportent. De la sorte, l'ensemble de données d'apprentissage comprend des mesures d'indicateurs de performances avant et après le déploiement de ces nouvelles configurations. Un exemple de période temporelle d'apprentissage sera présenté ci-après en relation avec la figure 4.

En 33, on construit une table TB_KPI_EV de données d'évolution des sites du réseau d'accès radio considéré pendant la période d'apprentissage considérée.

Création de la table d'évolution des performances des sites (ou des secteurs) entre avant et après les déploiements

Elle est obtenue par traitement des données temporelles (KPI) et topographiques (D_TPO) du réseau mobile dans la zone géographique d'apprentissage considérée. Par exemple, un des traitements comprend une extraction des données concernant les sites de la zone géographique contenant des cellules radio dont la date de mise en service appartient à un intervalle de temps donné, sur lequel on souhaite étudier a posteriori les déploiements effectués.

Par exemple, on construit la table d'évolution TB_KPI_EV comprenant plusieurs catégories ou groupes de colonnes parmi lesquel(le)s :

Topographie : les colonnes de ce groupe forment la clé primaire de la table d'évolution. Ce groupe contient les colonnes de coordonnées géographiques X et Y de la position de sites où se trouvent les cellules. Avantageusement, on peut préciser le secteur considéré dans une colonne dédiée. Par exemple, dans la table, les colonnes X et Y correspondent à la longitude et la latitude, et la colonne secteur est décrite par l'azimut.

- Configuration ajoutée : le nombre de colonnes de ce groupe est égal au nombre de bandes de fréquences existant dans la technologie que l'on peut déployer. Par exemple, lorsque des cellules 4G ont été ajoutées pendant la période d'apprentissage, la table comprend autant de colonnes que de configurations particulières ajoutées (ajoutée 700 MHz, ajoutée 800 MHz, ajoutée 1800 MHz, ajoutée 2100 MHz, ajoutée 2600 MHz).

Configuration existante : le nombre de colonnes de ce groupe est égal au nombre de bandes de fréquences existant dans la/les technologie/s dont on étudie l'impact du déploiement. Par exemple, si on souhaite étudier l'impact sur les performances de 4 des 5 fréquences 4G existantes des déploiements effectués, on prévoit 4 colonnes relatives aux 4 fréquences 4G existantes (existante 800MHz, existante 1800MHz, existante 2100MHz, existante 2600MHz). KPIs par fréquence avant déploiement : les colonnes de ce groupe contiennent les valeurs des indicateurs de performances KPI mesurées pour les fréquences de la configuration existante avant la période de déploiement. Par exemple, dans la table, on a pris en compte les trois indicateurs de performance suivants : l'usage des PRBs (PRB avt 800MHz,..., PRB avt 2600MHz), le nombre d'utilisateurs (Nb UT avt 800 MHz,..., Nb UT avt 2600 MHz ), et le nombre de PRBs/utilisateur (PPU avt 800 MHz,..., PPU avt 2600 MHz).
-KPIs par fréquence après déploiement : les colonnes de ce groupe contiennent les valeurs des Key Performance Indicators (KPIs) des fréquences de la configuration existante après déploiement. Naturellement, il y a autant de colonnes dans ce groupe que dans le groupe précédent. Par exemple, la table comprend les 3 KPIs précédents : l'usage des PRBs (PRB aps 800 MHz,..., PRB aps 2600 MHz), le nombre d'utilisateurs (Nb UT aps 800 MHz,..., Nb UT aps 2600), et le nombre de PRBs/utilisateur (PPU aps 800,..., PPU aps 2600 MHz).

- Croissance des KPIs (%) : les colonnes de ce groupe résultent d'un calcul de taux de croissance à partir des colonnes des groupes de KPIs par fréquence avant déploiement et KPIs par fréquence après déploiement.

Par exemple, le calcul du taux de croissance est direct, selon la formule suivante :

$$Cr = \frac{KPI_{Aps} - KPI_{Avt}}{KPI_{Avt}} \text{ (eq. 1)}$$

Où Cr désigne le taux de croissance, $KPI_{Aps}$ la mesure de l'indicateur de performance après le déploiement de la configuration considérée et $KPI_{Avt}$ la mesure de l'indicateur de performance avant le déploiement de la configuration considérée. Dans certains cas, il peut être intéressant de transformer les KPIs avant de calculer le taux de croissance. Par exemple, plutôt que de calculer la croissance du taux d'utilisation des PRBs, il est préférable de calculer la croissance de la disponibilité des PRBs. En effet, l'impact positif recherché est la diminution de l'utilisation des ressources à la suite du déploiement de nouvelles cellules radio. Pour un même écart d'usage des PRBs, le taux de disponibilité est d'autant plus important que l'occupation passe d'un niveau élevé à un niveau moyen que d'un niveau moyen à un niveau faible.

La relation entre la disponibilité et le pourcentage d'usage des PRBs est la suivante :

$$D = 100 - PU(PRBs) \text{ (eq. 2)}$$

Où D représente un taux de disponibilité des PRB et PU(PRBs) un pourcentage d'usage des PRBs.

Par exemple, on prévoit des colonnes dans la table d'évolution pour indiquer le taux de croissance du taux de disponibilité AGR (de l'anglais, « Availability Growing Rate ») des PRBs (AGR 800,..., AGR 2600), le taux de croissance UGR (de l'anglais, « User Growing Rate ») du nombre d'utilisateurs (UGR 800,..., UGR 2600), et le taux de croissance PPUGR du nombre de PRBs/utilisateur (PPUGR aps 800,..., PPUGR aps 2600).

Périodes de temps choisies pour l'extraction des données du réseau relatives aux cellules radio déployées et pour le calcul des KPIs avant / après déploiement

La comparaison des valeurs de KPIs avant/après le déploiement de nouvelles cellules radio n'est pas un exercice trivial car elle est facilement biaisée par des facteurs externes. Si on compare simplement les KPIs du mois précédent avec le mois suivant le déploiement sur un site donné, il est possible que les variations saisonnières influencent plus les valeurs des KPIs que le déploiement candidat lui-même. A cet égard, on peut citer l'exemple de la période estivale, marquée par une forte mobilité géographique avec le départ des vacanciers qui quittent leur lieu de résidence principale. Ce phénomène est très marqué en région parisienne où l'on constate une baisse significative de trafic du réseau mobile entre le mois de juin et la période de juillet/août, puis un regain de charge en septembre, après la rentrée scolaire.

Pour réduire l'effet de ce type de saisonnalité, une solution est de comparer les valeurs de KPIs d'un mois M donné de l'année courante avec le même mois M l'année suivante. L'hypothèse est qu'un mois donné subit la même saisonnalité d'une année sur l'autre. On suppose aussi que la ou les nouvelles configurations ont eu lieu pendant une période de déploiement insérée entre les deux occurrences successives de ce mois M. A titre illustratif, la figure 4 présente une chronologie expliquant les intervalles d'étude. Pendant les mois (MN -1, MN, avec N=2022) qui encadrent la période de déploiement DP, des mesures d'indicateurs de performances sont obtenues avant (KPI$_{Avt}$) et après déploiement (KPI$_{Aps}$). On remarque une différence de trafic entre le mois M de l'année N-1 et de l'année N. Elle est supposée être due au moins en partie à la répartition de charge des utilisateurs entre les cellules existantes et les nouvelles cellules, et pour une autre partie, cette variabilité peut être expliquée par l'évolution du nombre d'abonnés de l'opérateur sur la période temporelle considérée.

Ensemble témoin

On comprend qu'une évolution importante du nombre d'abonnés de l'opérateur peut biaiser les résultats de la comparaison des valeurs de KPIs avant et après déploiement de nouvelles ressources. Pour être capable de prendre en compte cette évolution, il peut être intéressant d'utiliser un ensemble « témoin » de données d'apprentissage, comprenant uniquement des sites dont la configuration n'a pas évolué dans la période de déploiement DP. Une comparaison des valeurs de KPIs pour cet ensemble témoin permettrait d'obtenir une différence indicative de l'évolution « naturelle » du réseau mobile sur la période d'observation et qu'on pourrait soustraire de celle des sites mis à jour.

On note que plusieurs contraintes sont à respecter pour la constitution d'un tel ensemble témoin, parmi lesquelles :

- une absence de déploiement de cellules sur le site sur la période d'observation, ainsi que dans un voisinage fixé à l'avance. Par exemple en zone urbaine, on peut choisir un rayon de 1km,
- la zone géographique des sites de l'ensemble témoin doit être comprise dans celle de l'ensemble d'apprentissage. On peut même distinguer des sous-ensembles de témoins en fonction du tissu urbain (quartier industriel, résidentiel, de loisir, zones de transport, zones commerciales...) à l'intérieur de la zone géographique de l'ensemble d'apprentissage. Dans ce cas, le choix du sous-ensemble témoin dont l'évolution est à soustraire devra être le plus proche en termes de topographie du site mis à jour.

Augmentation des données

On sait que pour mettre en oeuvre avec succès une technique d'apprentissage machine, et construire un modèle de prédiction performant, à la fois capable d'être précis et de généraliser, on a besoin d'un grand nombre de données d'apprentissage sur une période d'observation la plus longue possible.

A cet égard, plusieurs options sont possibles pour augmenter les données d'apprentissage.

On peut recueillir les valeurs de KPIs au niveau des secteurs des cellules. En effet, chaque site donc chaque cellule possède en moyenne trois secteurs, ce qui permet, pour un même historique, de multiplier par trois la taille du jeu de données,

On peut aussi faire glisser une période d'observation d'un mois jusqu'à ne plus avoir un historique suffisant, et pour chaque période d'observation, réaliser la table. Par exemple, à partir d'un historique de données du 1er janvier 2021 au 30 juin 2022 (1 an et demi), il est possible de créer six tables comparant les performances de :

- janvier 2021 avec janvier 2022,
- février 2021 avec février 2022 ,
- ... , - juin 2021 avec juin 2022.

Ceci permet d'allonger la période d'observation et de s'approcher d'une durée idéale de l'ordre de deux ans.

On peut également ajouter les données de l'ensemble témoin à l'ensemble de données d'apprentissage.

Plus l'historique des données est long, plus le nombre d'exemples de déploiements est important. Le minimum est un historique d'un an, mais la taille idéale serait de deux ans. Pour les données de l'ensemble témoin, les colonnes de configuration ajoutée seront toutes nulles puisque rien n'est déployé. Cependant, il a été observé empiriquement que ces sites pouvaient améliorer la capacité de généralisation des modèles prédictifs.

On peut finalement concaténer les six tables d'évolution obtenues pour ne former qu'une seule table T_KPI_EV. En cas de doublons (même topographie et même configuration déployée sur la même configuration existante), on pourra agréger les données en une seule ligne en appliquant la fonction moyenne ou médiane.

Modélisation (34) de la couverture de service des sites (ou des secteurs) existants et création d'une table décrivant la topographie des sites

Pour créer une table décrivant la topographie des sites ou des secteurs, il faut connaître leur couverture de service. Celle-ci peut être déterminée par des logiciels de simulation.

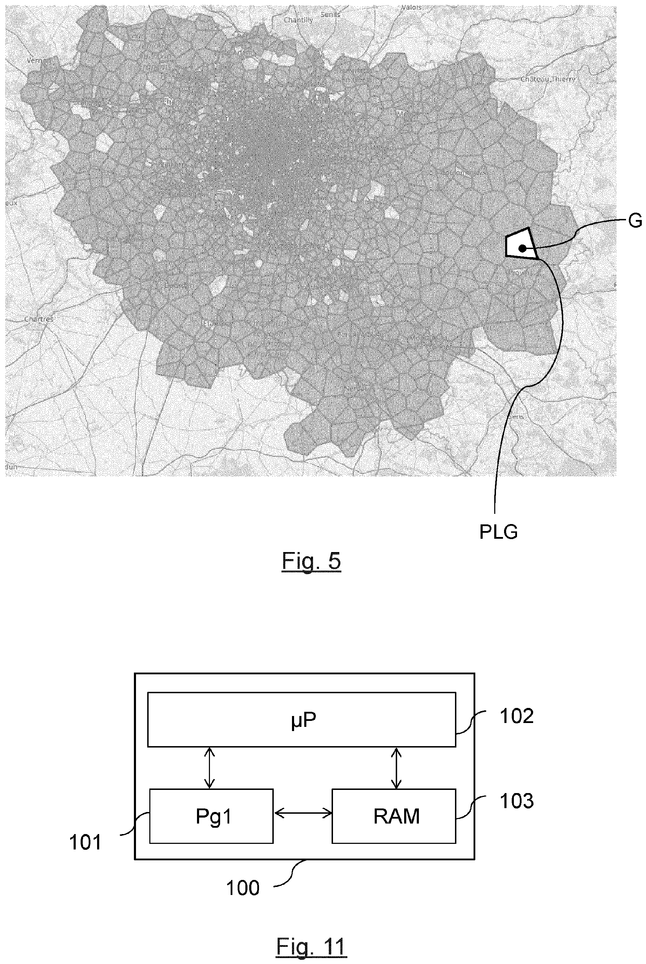

En variante, la couverture de service des sites (ou de leurs secteurs) dont on a obtenu préalablement les informations topographiques, peut être déterminée en 34 en se basant sur le diagramme de Voronoï. Dans le cas où l'on étudie des sites, on utilise le diagramme tel quel en utilisant les positions géographiques des sites comme germes. On obtient des polygones, dont l'aire représente la couverture de service. A titre illustratif, la figure 5 présente un exemple de carte de la couverture de service des sites d'une zone géographique donnée. On a encadré un polygone PLG centré sur un germe G correspondant aux coordonnées géographiques d'un site.

Modélisation de la couverture de service d'un secteur

En variante, on peut modéliser la couverture de service de chacun des secteurs des sites de la zone géographique étudiée. Cette modélisation subdivise les polygones du diagramme de Voronoï associés à des sites en sous-polygones SPLG associés aux secteurs couverts par ces sites. Avantageusement, on peut agrandir les polygones (SPLGA)pour rendre compte de la superposition des zones de couvertures en bordure de secteurs, comme illustré par le schéma de la figure 6.

Plus précisément, le découpage est fait suivant les bissectrices entre les directions azimutales des antennes à l'aide de fonctions géo-spatiales fournie par des librairies. On peut se servir par exemple des fonctions de Postgis (https://postgis.net/), extension pour le système de base de données PostgreSQL (https://www.postgresql.org/).

Ensuite, pour rendre compte de la superposition de couverture en bordure de secteurs, on applique une fonction de mise à l'échelle pour agrandir les polygones. Empiriquement, un agrandissement d'un facteur 1.5 permet une bonne correspondance entre le rayon du cercle englobant le polygone et le rayon moyen calculé à partir des données réseaux. Le point d'origine de l'agrandissement peut être l'emplacement du site, ou un point appartenant dans la direction de l'azimut d'un secteur.

Création du tissu urbain couvert par chaque site (ou secteur) existant

A partir des données de couverture de service obtenues pour les sites et/ou les secteurs de la zone géographique étudiée, on crée en 35 une table TB_TU représentant le tissu urbain couvert par chaque site ou secteur.

Les colonnes de cette table peuvent être regroupées selon les groupes suivants :

Topographie : les colonnes de ce groupe forment la clé primaire de la table. Il contient les colonnes de coordonnées géographiques X et Y de la position de chaque site. Si l'on fait l'étude à l'échelle du secteur, on rajoute aussi une colonne pour l'identifier.

Cartographie : Chaque colonne de ce groupe quantifie la présence d'un type d'infrastructure, de caractéristique ou d'utilisation de terrain, de point d'intérêt couvert par le site ou le secteur. Selon le type d'agrégation considéré, on peut par exemple indiquer si une infrastructure est présente ou non, ou bien en compter le nombre, ou en calculer la surface totale. On inclut dans ce groupe la surface du polygone correspondant à la zone couverture de service modélisée.

Démographie, socio-économie : Chaque colonne de ce groupe comprend des informations renseignant sur la population (nombre d'habitants par exemple, d'après les données de la base de données « Humanitarian Data Exchange ») ou des données socio-économiques relatives la zone couverte (par exemple issues des données carroyées (carrés de 20O m de côté) de l'INSEE en 2017, relatives aux revenus des population, à la pauvreté et au niveau de vie en France, accessibles au lien suivant https://www.insee.fr/fr/statistiques/6215138?sommaire=6215217)).

Méthodes d'agrégation des données

Les données de couverture de service, cartographiques, démographiques et socio-économiques collectées sont ainsi représentées dans des tables indexées par des coordonnées géographiques. On peut donc utiliser des fonctions géo-spatiales pour faire une jointure spatiale entre la couverture de service et chaque source de données.

Par exemple, avec le module Postgis de Postgresql, on peut réaliser une jointure spatiale sur la condition d'intersection entre des objets géométriques représentatifs de la couverture de service et des objets géométriques décrivant le tissu urbain.

Une fois la jointure réalisée, on agrège les données à l'échelle du site ou du secteur.

Par exemple, la fonction d'agrégation pour les données démographiques et socio-économiques est la somme. Pour les données cartographiques, la fonction peut être le comptage des objets ou la somme des surfaces de ces objets. Dans le cas d'OpenStreetMap qui est une base de données hétérogènes comprenant des objets ponctuels (points d'intérêts) et des polygones, on approxime la surface d'un point intérêt à 1m2 pour faire la somme des surfaces.

Constitution du jeu de données d'entraînement pour le module d'intelligence artificielle

À partir de la table T_KPI_EV d'évolution des performances des sites/secteurs et de la table TB_TU du tissu urbain associé à chaque site/secteur, on constitue en 36 le jeu de données d'entraînement LSET pour construire le modèle de prédiction MOD.

Une première étape consiste à fusionner les deux tables, en faisant une jointure ou une indexation sur les colonnes du groupe topographie. Étant donné que certaines fréquences n'existent pas sur certains sites, la table résultante peut contenir des valeurs inconnues. Elles sont dans ce cas mises à 0.

La table résultante est ensuite divisée en quatre ensembles ou sous-tables comprenant :

- une table X_TRN de variables qui est présentée en entrée au module d'intelligence artificielle pour l'entraînement du modèle de prédiction MOD,
- une table Y_TRN de variables qui correspond aux valeurs cibles que le modèle de prédiction MOD doit apprendre à prédire, c'est-à-dire qui doivent être produites en sortie du module d'intelligence artificielle, pendant l'entraînement sur les données d'entrées X_TRN,
- une table X_TST de variables qui est présentée en entrée au module d'intelligence artificielle pour évaluer la précision des sorties du modèle entraîné,
- une table Y_TST de variables qui correspond aux valeurs cibles associées à X_TST.

En relation avec les figures 7A et 7B, les tables X.TRN, Y_TRN sont utilisées dans un premier temps pour l'entraînement/apprentissage (TRN, figure 7A) du module d'intelligence artificielle MIA et donc la construction dumodèle de prédiction MOD, tandis que les tables X_TST, Y_TST qui comprennent des données que le modèle de prédiction MOD n'a jamais vues, sont utilisées dans un deuxième temps pour évaluer (TST, figure 7B) l'erreur de prédiction du modèle de prédiction MOD construit à partir des tables X_TRN, Y_TRN dans une situation qui se rapproche le plus possible du déploiement de la solution en milieu de production.

Ainsi, les variables incluses dans les tables d'entrée X_TRN, X_TST sont les colonnes des groupes Configuration ajoutée, Configuration existante, KPIs par fréquence avant déploiement, cartographie, démographie, socio-économie.

Les variables incluses dans les tables de sortie Y_TRN, Y_TST sont les colonnes du groupe KPIs par fréquence après déploiement, ou du groupe Croissance des KPIs. Il a été observé empiriquement que les colonnes du groupe Croissance des KPIs étaient mieux prédites en réalisant la prédiction sur le groupe KPIs par fréquence après déploiement, puis en faisant le calcul du taux de croissance.

Normalisation des données X_TRN, X_TST : les prédictions peuvent être améliorées par exemple en application d'une technique dite de fréquence inverse des documents TF-IDF (en anglais, « term frequency-inverse document frequency »), par exemple décrite au lien suivant (, https://fr.wikipedia.org/wiki/TF-IDF) pour pondérer les valeurs dans les colonnes. Elle est généralement utilisée dans l'étude de corpus de textes, pour diminuer le poids de mots d'un texte dont les valeurs sont sur-représentées, par exemple en réduisant l'impact d'articles tels que « le/la/les » et, au contraire en augmentant celui de noms plus spécifiques, par une analyse d'un nombre d'apparition des mots dans le texte.

En l'espèce, il s'agit ici d'appliquer la technique TF-IDF à l'ensemble des colonnes contenant des données topographiques, en considérant un type d'objet géographique comme un mot, et leur nombre/somme de surfaces comme un nombre d'apparitions pour opérer un rééquilibrage des colonnes par pondération à l'aide de coefficients dérivés de la technique TF-IDF. A titre d'exemple, cette opération permettrait de réduire l'impact des feux tricolores présents en nombre, et d'augmenter celui de supermarchés moins nombreux mais plus pertinents en termes de considérations socio-économiques.

Méthode de séparation des données d'entraînement et de test :

La phase d'apprentissage comprend un entraînement du modèle de prédiction puis un test du modèle précédemment entraîné, de sorte à vérifier notamment une précision des données de sortie qu'il produit. Pour ce faire, on peut employer des méthodes classiques de validation croisée comme par exemple la technique dite du « K-fold clustering » pour estimer statistiquement l'erreur. En variante, la technique du bootstrap peut aussi être utilisée.

En ce qui concerne les secteurs, il convient de noter que pour éviter toute fuite d'information entre les données d'entraînement et de test, il est préférable d'effectuer une séparation par sites et non par secteurs, c'est-à-dire que tous les secteurs d'un même site doivent appartenir soit à l'ensemble d'entraînement, soit à l'ensemble test.

Choix de l'algorithme pour l'entraînement du modèle de prédiction

Le problème à résoudre est un problème de régression multi-cibles, car on cherche à prédire plusieurs valeurs continues (une par bande de fréquences et par KPI).

L'entraînement du modèle de prédiction MOD dépend de l'algorithme choisi pour le module d'intelligence artificielle MIA. Les données étant tabulaires, l'état de l'art actuel préconise l'utilisation de modèles basés sur les arbres de décision, par exemple décrits dans le document intitulé « Tabular Data: Deep Learning is Not All You Need », publié en 2022, dans le journal « Information Fusion », volume 81, pages 84-90, ISSN 1566-2535, accessible au lien suivant https://arxiv.org/abs/2106.03253)

Il n'est cependant pas à exclure que des réseaux de neurones basés sur des techniques d'apprentissage profond (de l'anglais, « deep learning ») deviennent les meilleurs modèles pour ce domaine dans un futur proche. On peut citer des recherches récentes sur les réseaux de type transformeurs (en anglais, « Transformers »), « appliquées aux données tabulaires (TabTransformer: Tabular Data Modeling Using Contextual Embeddings, https://arxiv.org/abs/2012.06678).

Concernant les modèles basés sur des arbres de décisions, les modèles dits « gradient boostés » comme XGBoost (https://xgboost.ai/), Catboost (https://catboost.ai/) et LightGBM (https://lightgbm.readthedocs.io/en/v3.3.2/) se disputent la première place en fonction des problèmes à résoudre.

Bien sûr, d'autres techniques peuvent être utilisées, parmi lesquelles on trouve de façon non exhaustive : Support Vector Machines (SVM) / Support Vector Regressor (SVR), K-nearest neighbors (KNN), Random Forests.

Optimisation : tous les algorithmes cités précédemment possèdent des hyperparamètres. Ce sont des paramètres choisis à l'avance qui influencent l'entraînement et donc la précision des prédictions. Le choix des hyperparamètres peut faire l'objet d'une optimisation à l'aide de méthodes connues comme une recherche exhaustive (en anglais, « grid search »), ou aléatoire (en anglais, « randomized search ») et qui ne seront pas décrites ici.

Traitement de la sortie : comme mentionné précédemment, la table de données d'entrée comportait des valeurs inconnues qui ont été mises à 0. On traite donc les données de sortie du modèle en forçant à 0 les prédictions obtenues pour des cellules correspondant à des fréquences inexistantes parmi les sites de l'ensemble d'apprentissage.

Évaluation du modèle de prédiction basé sur une erreur

À partir des données X_TST, Y_TST de test, le modèle de prédiction MOD peut être évalué en 38, par exemple sur la base de :

- l'évaluation de l'erreur de prédiction en sortie du module d'intelligence artificielle, ou
- l'évaluation de l'erreur de prédiction sur un classement des sites en fonction du taux de croissance estimé, lorsque le procédé d'évaluation est appliqué à l'arbitrage entre plusieurs configurations candidates.

Évaluation de l'erreur de prédiction en sortie du modèle de prédiction MOD :

Une métrique classique pour un problème de régression est l'erreur quadratique moyenne RMSE (en anglais, « Root Mean Squared Error « ):

$$RMSE = \sqrt{\frac{1}{n}\sum_{i=0}^{n}(\hat{y}_i - y_i)^2} \text{ (eq. 3)}$$

où n est le nombre de sites/secteurs prédits, $\hat{y}_i$ la i-ème prédiction et $y_i$ la valeur réelle.

L'erreur RMSE est exprimée dans la même unité que la valeur à prédire. On note cependant que cette erreur est fonction d'une différence absolue. Elle n'est donc pas très bien adaptée à notre problème comportant des données d'échelles très variables.

Une autre métrique à considérer est donc l'erreur SMAPE (de l'anglais, « Symétrie Mean Absolute Percentage Error »), basée sur des différences relatives (pourcentages) :

$$SMAPE = \frac{1}{n}\sum_{i=1}^{n}\frac{|\hat{y}_i - y_i|}{|y_i| + |\hat{y}_i|} \text{ (eq. 4)}$$

Cette métrique normalise l'erreur entre 0 et 1.

Quelle que soit la métrique utilisée, le modèle de prédiction choisi parmi un ensemble de modèles de prédiction est celui qui correspond à la valeur d'erreur la plus faible.

Évaluation de l'erreur de prédiction au classement des sites en fonction du taux de croissance estimé

L'évaluation précédente, basée sur une mesure d'erreur, est une évaluation directe des performances. Cependant, elle ne dit pas grand-chose sur l'utilité du modèle de prédiction obtenu. Les inventeurs ont étudié la possibilité d'évaluer les modèles de prédiction en se basant sur des cas d'usage de ces modèles.

On considère par exemple une application de l'invention à la priorisation de sites à déployer. Dans ce contexte, il est pertinent d'évaluer un modèle à partir du classement des sites qu'il produit.

Un protocole possible est le suivant :

1. Sélection aléatoire de n sites/secteurs dans l'ensemble de test ;
2. Prédiction des indicateurs de performances KPIs après les déploiements historiques connus ;
3. Calcul d'un taux d'évolution des KPIs ;
4. Calcul d'un score en agrégeant les taux d'évolution de toutes les fréquences ;
5. Évaluation des scores prédits par rapport aux scores réels ;
6. Réitération des étapes précédentes pour obtenir une évaluation statistique.

Calcul du score associé au déploiement d'une configuration sur un site

Par exemple, on affecte les valeurs de score suivantes à une cellule de ce site :

- 0 : si l'évolution est négative,
- 1 : si l'évolution est nulle, ou si la fréquence n'existe pas,
- 2 : si l'évolution est positive.

Par exemple, si un site de configuration {800 MHz, 1800 MHz, 2600 MHz} obtient un taux d'évolution de ses indicateurs de performances {2 %, 0 %, -0.5 %}, alors le score des fréquences est {2, 1, 1, 0}. On note que le score 1 supplémentaire est affecté à la fréquence 2100MHz qui n'est pas présente. De la sorte, la cellule 2100MHz qui n'est pas présente est considérée comme une cellule n'ayant pas évolué.

On calcule ensuite le score du site comme la moyenne des scores des cellules. Dans l'exemple précédent, il vaut 1.

Par exemple, pour des cellules de technologie 4G dont étudie l'évolution des bandes de fréquences 800MHz, 1800MHz, 2100MHz et 2600MHz, on peut considérer qu'un site ayant obtenu un score strictement supérieur à 1 est un site dont l'évolution globale est positive. Au contraire, un site associé à un score strictement inférieur à 1 est un site dont l'évolution globale est négative. Un site ayant obtenu un score égal à 1 n'a globalement pas évolué en termes de performances.

A cet égard, on note souvent une évolution globalement négative des sites malgré une mise à jour. Ceci peut s'expliquer par le fait que l'évolution d'un site est aussi influencée en partie par celle du parc d'utilisateurs abonnés et de leur consommation. Il serait même envisageable de sélectionner pour un futur déploiement, des sites dont le score est le moins bon dans le classement obtenu, en faisant l'hypothèse que ce sont les sites ayant le plus besoin d'une augmentation de capacité. Dans ce cas, il suffit de changer de méthode d'attribution des scores, par exemple en inversant les critères.

Variante de score par fréquence de site ou de secteur, utilisable aussi bien à l'entraînement qu'en production (pour la prédiction effective d'une variation d'indicateurs de performance)

En variante, on calcule les scores comme suit :

$$SC_k = \begin{cases} 0 & GR_k < 0 \\ 1 & GR_k = 0 \text{ si la fréquence n'existe pas} \\ \frac{2}{1+e^{-GR_k}} & GR_k > 0 \end{cases} \text{(eq. 5)}$$

Où :

- SCk est le score de la fréquence (ou cellule) k d'un site/secteur donné,
- GRk est le taux de croissance prédit du KPI.

Un avantage de cette variante, est que le score obtenu tend vers 2 lorsque le taux de croissance prédit GRk va vers l'infini, ce qui permet de différencier les taux positifs tout en bornant les valeurs prises par le score SCk.

Le score global du site peut être obtenu en calculant la moyenne des scores des cellules k qui le constituent :

$$SC(STi) = \frac{1}{n}\sum_{k=1}^{n} SC_k \text{ (eq.6)}$$

En variante, on peut simplement faire la somme des scores des cellules du site.

Métriques pour évaluer les scores

On a par exemple recours à des métriques classiquement utilisées dans la recherche d'information. Étant donné un classement de n éléments, on appelle rang k la k-ième position du classement. On considère par exemple une métrique de type réciproque RR (de l'anglais, « Reciprocal Rank »), connu en soi, qui prend la forme suivante :

$$RR = \sum_{k=1}^{n} \frac{1}{k} rel(k), \text{ (eq. 7)}$$

Où rel(k) vaut 1 au rang où le score est maximal, et 0 partout ailleurs.

En variante, on utilise une métrique de précision moyenne AP (en anglais, « Average Precision »), qui s'exprime comme suit :

$$AP = \frac{\sum_{I=1}^{n}\left(P(k).rel(k)\right)}{NPE} \text{ (eq. 8)}$$

Où :

- rel(k) vaut 1 si le score d'un site est strictement supérieur à un seuil arbitrairement choisi, 0 sinon ;
- P(k) est la précision au k-ième rang du classement.

Par exemple, un seuil de 1 signifie que l'on ne considère que les sites avec un score strictement supérieur à 1 comme des sites pertinents pour le déploiement. On note qu'un bon modèle est un modèle qui classera de tels sites dans les premières places du classement.

On peut aussi choisir un seuil moins strict en fonction de la réalité du terrain.

Selon une autre variante, on évalue une valeur de gain, par exemple de type cumulatif actualisé NDCG (de l'anglais, « Normalized Discounted Cumulative Gain »).

$$nDCG_k = \frac{DCG_k}{IDCG_k} \text{ (eq. 9)}$$

Où :

-

$$DCG_k = \sum_{i=1}^{k} \frac{rel_i}{log_2(i+1)} \text{ (eq. 10)}$$

- {1, ..., k} est l'ordre du classement jusqu'au rang k en fonction du score basé sur les prédictions du modèle, $rel_i$ le score réel,
- Le DCGk n'étant pas borné, on divise par IDCGk qui est le score obtenu pour classement parfait.

Cette métrique est donc normée entre 0 et 1.

Dans une approche statistique, on moyenne ces différents scores sur plusieurs classements, pour obtenir un rang réciproque moyenné MRR (de l'anglais, « Mean Reciprocal Rank », une précision moyenne MAP (de l'anglais, 'Mean Average Précision ») et un gain moyenné MNDCG (de l'anglais, « Mean Normalized Discounted Cumulative Gain ».

Une fois qu'on a obtenu le meilleur modèle de prédiction, on peut le déployer en situation réelle, c'est-à-dire l'utiliser pour évaluer une configuration candidate d'un site d'un réseau de communication selon le procédé de l'invention décrit en relation avec la figure 2.

On détaille maintenant en relation avec la figure 8 un exemple de mise en application du procédé selon l'invention pour évaluer des configurations candidates. Par exemple, ces configurations concernent les 5 sites ST1-ST5 du réseau de communication représentés sur la figure 1.

Comme pour la phase d'entraînement, on obtient en 80, 81 (étape 20 d'obtention des données réseau historiques DRH de la figure 2) des valeurs d'indicateurs de performances KPI_PRC et des informations topographiques I_TPO des sites ST1-ST5 existants pour le réseau RAN pendant une période temporelle de référence et des données externes démographiques, cartographiques et avantageusement socio-économiques dans une zone géographique ZG comprenant les sites ST1-ST5. En 82, on crée une table des indicateurs de performances TB_KPI_PRC, à partir des valeurs d'indicateurs de performance KPI_PRC. On modélise en 83 les zones de couverture des sites ST1-ST5 dans la zone géographique ZG considérée, comme précédemment décrit et on construit en 84 une table TB_TU_H du tissu urbain associé aux sites ST1-ST5 dans ces zones de couverture, à partir des données externes DEXT contextuelles.

On note que la structure de la table du tissu urbain TB_TU_H est la même que celle précédemment décrite pour l'ensemble d'apprentissage. En revanche, on construit ici en 82 une table de performances TB_KPI_H à la place d'une table d'évolution des performances, puisqu'on s'appuie seulement sur des données historiques, antérieures à un futur déploiement.

Création de la table des performances des sites (ou secteurs)

La table des performances des sites/secteurs représente l'état du réseau à l'instant présent. Les colonnes de cette table forment un sous-ensemble des colonnes de la table d'évolution des performances TB_KPI_EV précédemment décrite.

On retrouve toutefois des groupes de données déjà présents dans la table d'évolution TB_KPI_EV :

Topographie : les colonnes de ce groupe forment la clé primaire de la table. Il contient les colonnes de coordonnées géographiques X et Y de la position des sites ST1-ST5. Si l'on fait l'étude à l'échelle du secteur, on rajoute aussi une colonne pour l'identifier.

Configuration existante : le nombre de colonnes de ce groupe est égal au nombre de bandes de fréquences existant dans la/les technologie/s dont on étudie l'impact du déploiement. On comprend qu'il y en a potentiellement plus que de cellules déjà déployées sur un site STi donné. Par exemple en table 1, on décide d'étudier l'impact du déploiement de configurations candidates sur 4 des 5 fréquences 4G en service, donc il y a 4 colonnes (existante 800 MHz, existante 1800 MHz, existante 2100 MHz, existante 2600 MHz).

KPIs par fréquence avant déploiement : les colonnes de ce groupe contiennent les valeurs des KPIs obtenues pour les fréquences des cellules de la configuration existante à l'instant présent, sur une sous période de référence récente (par exemple 1 mois).

Par exemple, la table de performances TB_KPI_H comprend trois indicateurs de performance distincts : l'usage des PRBs (PRB avt 800 MHz,..., PRB avt 2600 MHz), le nombre d'utilisateurs (NB UT avt 800 MHz,..., NB UT avt 2600), et le nombre de PRBs/utilisateur (PPU avt 800 MHz,..., PPU avt 2600 MHz).

Table décrivant la topographie des déploiements prévus sur les sites (ou secteurs)

Cette table TB_TPO_CND est constituée des mêmes colonnes que celle du groupe « Configuration ajoutée » déjà décrit en relation avec la construction de la table d'évolution TB_KPI_EV. Une différence notable réside dans le fait que c'est à l'opérateur d'y renseigner les déploiements qu'il envisage, alors que dans la table d'évolution, ces données topographiques faisaient partie des données historiques (puisque relatives à des configurations déjà déployées).

Configuration à déployer : le nombre de colonnes de ce groupe est égal au nombre de bandes de fréquences existant dans la technologie que l'on peut déployer.

Par exemple, dans le cas d'un ajout de cellules 4G, il comporte 5 colonnes (ajoutée 700 MHz, ajoutée 800 MHz, ajoutée 1800 MHz, ajoutée 2100 MHz, ajoutée 2600 MHz).

On note que l'invention permet aussi d'évaluer l'ajout de cellules mettant en oeuvre une autre technologie, par exemple 5G, et/ou la réutilisation de fréquences 4G pour la 5G, ce qui correspond à un réaménagement du site (de l'anglais, « refarming »). Bien sûr, il conviendrait d'avoir préalablement entraîné le module d'intelligence artificielle MIA à prédire l'impact sur les performances du réseau de ce type de déploiement.

Constitution du jeu de données d'entrées INP_SET pour la prédiction d'une évolution des KPIs par le modèle MOD du module d'intelligence artificielle

La méthode pour constituer le jeu de données à présenter en entrée du modèle prédictif est la même que celle précédemment décrite pour la phase d'entraînement du modèle de prédiction MOD, à la différence que l'on ne crée qu'un seul. En effet, il n'est pas nécessaire ici de prévoir un ensemble d'entraînement et de test, et on ne dispose pas des valeurs décrivant l'évolution réelle post-déploiement.

Fusion des jeux de données : Les trois tables de performances des sites/secteurs, de topographie des déploiements prévus et de tissu urbain associé à chaque site/secteur sont fusionnées en faisant une jointure sur les colonnes du groupe topographie. Étant donné que certaines fréquences n'existent pas sur certains sites, la table de données INP_SET correspondant au jeu de données d'entrée peut contenir des valeurs inconnues, qui sont dans ce cas mises à 0. Dans cet exemple, la table INP_SET comprend 5 lignes (une par site STi, avec I entier compris entre 1 et 5).

Ainsi les variables gardées dans INP_SET sont les Colonnes des groupes Configuration à déployer, configuration existante, KPIs par fréquence avant déploiement, cartographie, démographie, socio-économie.

Normalisation des données de la table INP_SET : les prédictions peuvent être améliorées par exemple en appliquant une technique TF_IDF dite de fréquence des termes - fréquence inverse des documents (en anglais, « term frequency-inverse document frequency »), pour pondérer les valeurs dans les colonnes.

On note que, dans l'exemple qui vient d'être décrit, les données réseau historiques collectées ne concernent que des sites sur lesquels le déploiement de configurations candidates est envisagé. Néanmoins, l'invention n'est pas limitée à cet exemple. Dans un autre mode de réalisation de l'invention, particulièrement adapté aux zones moins denses ou rurales, l'étude de l'impact du déploiement de nouvelles cellules est élargie à des sites voisins. Pour ce faire, il convient alors de prendre en compte au moins une information topographique supplémentaire qui est la distance géodésique entre le site où le déploiement d'une configuration est envisagé (ou bien a eu lieu pour les données d'apprentissage), et le site voisin.

En outre, si la configuration candidate concerne un nouveau site qui n'existait pas avant le déploiement, alors il convient aussi d'ajouter une colonne pour une information, par exemple à valeur binaire, indiquant si le site existait (1) avant le déploiement ou non (0).

Dans la ligne de la table INP_SET, la configuration existante correspond alors à celle du site voisin impacté et la configuration ajoutée à celle déployée sur le site mis à jour ou créé.

Prédiction des performances des cellules existantes

La table INP_SET obtenue en 85 est présentée en entrée du module d'intelligence artificielle MIA entraîné et testé.

Selon l'entraînement réalisé, le modèle de prédiction MOD mis en oeuvre par ce module produit en 86 une sortie par site ou par secteur. Chacune de ces sorties est composée de plusieurs variables résultant soit d'une estimation des KPIs après le déploiement, soit d'une estimation d'un taux d'évolution des KPIs entre avant et après le déploiement.

Le format de sortie est le même que pour les cibles Y_TST décrites en lien avec la phase d'apprentissage.

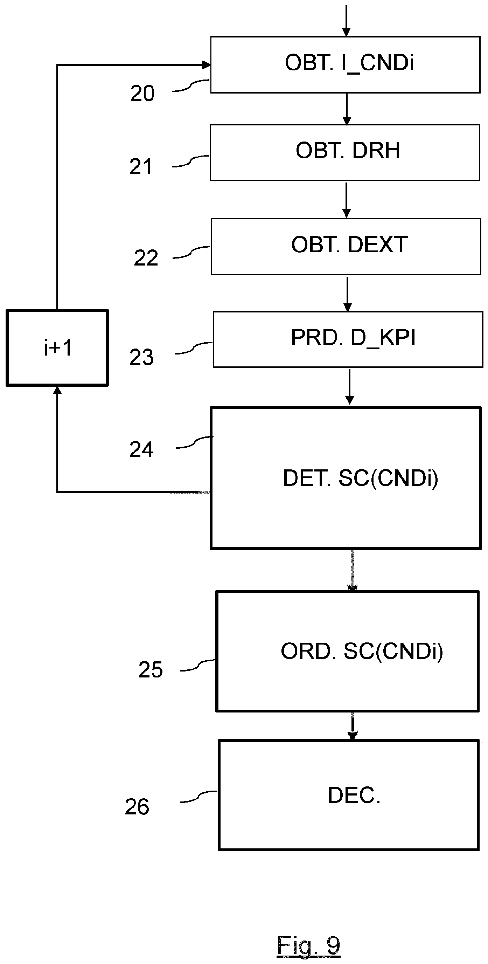

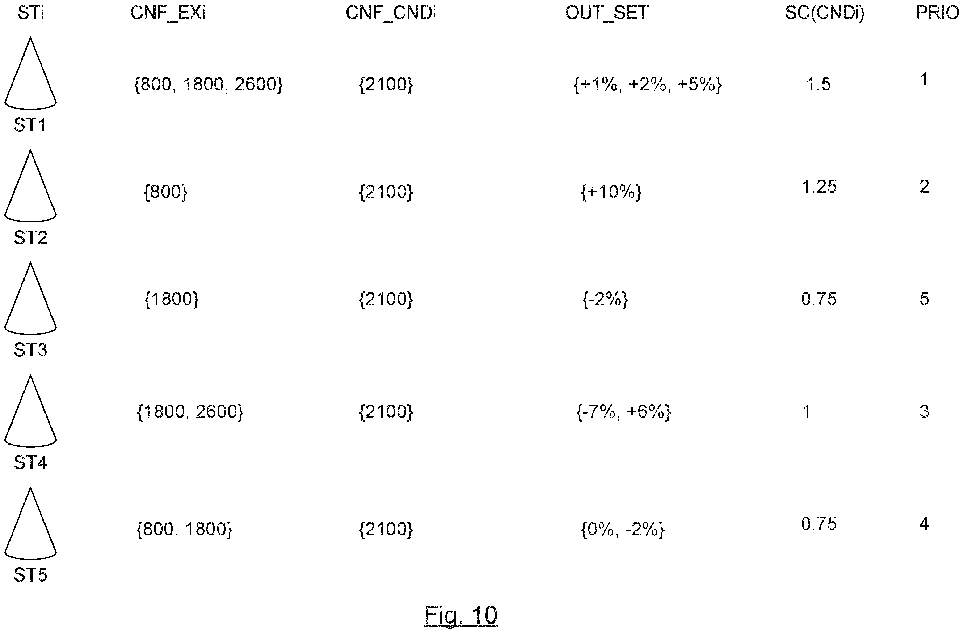

En relation avec les figures 9 et 10, on décrit maintenant un mode de réalisation selon lequel le procédé d'évaluation qui vient d'être décrit est appliqué à l'arbitrage entre plusieurs configurations candidates. A titre d'exemple, on considère les 5 sites ST1-ST5 de la figure 1. Bien sûr, l'invention n'est pas limitée à cet exemple et s'appliquerait à un nombre plus élevé de sites candidats. A cet égard, on note que l'utilisation des métriques d'évaluation des scores précédemment décrites pourra être adaptée en fonction de ce nombre. Par exemple, pour classer 5 sites, la métrique NDCG est utilisée au rang k=5, mais pour classer 50 sites, on pourrait s'arrêter au rang k=1 et n'évaluer ainsi que la précision des scores des 10 meilleurs scores obtenus.

On évalue ensuite chaque configuration candidate CNDi, avec i compris entre 1 et 5, en mettant en oeuvre les étapes du procédé qui vient d'être décrit. Dans cet exemple, les données réseau historiques sont collectées pour les cellules radio déjà implantées sur les sites candidats ST1-ST5.

En 24, un score Sci est obtenu pour le site STi. Pour ce faire, les étapes 20-24 peuvent être mises en oeuvre de façon itérée pour traiter séquentiellement la configuration candidate CNDi de chaque site STi ou bien, en variante, toutes les configurations candidates sont évaluées en même temps.

Classement des déploiements à réaliser sur la base des évolutions prédites

Un score global Sci pour chaque site/secteur candidat STi est calculé en 24 en fonction des valeurs de KPIs ou de taux d'évolution de KPIs produites en sortie du module d'intelligence artificielle. Préférentiellement, ce score global est défini de la même façon que celui utilisé pendant la phase d'entraînement puisqu'on connaît la précision du modèle sur celui-ci.

Les sites/secteurs candidats sont ensuite classés en 25 par ordre décroissant de score.

Priorisation des déploiements en suivant l'ordre du classement

Ce classement obtenu suggère l'ordre de déploiement des sites/secteurs le plus avantageux pour l'opérateur en termes :

- d'amélioration de la qualité de service (débit, ressources/utilisateur), et/ou
- de diminution de la charge réseau, et/ou
- de priorisation des sites les plus chargés ou sollicités (en fonction de la fonction de score choisie).

Cette priorisation est traduite en termes de critères CP qui sont pris en considération pour calculer le score global SC(CNDi) en 24 à partir des prédictions obtenues par le module d'intelligence artificielle en 23. Le score est calculé comme décrit pour la phase d'entraînement.

Optionnellement, le classement obtenu est exploité en 25 pour décider en 26 d'au moins une configuration à déployer, la première du classement obtenu en 24.

En relation avec la figure 10, on présente le classement obtenu pour les 5 sites candidats de la figure 1. La figure 10 présente un tableau comprenant pour chaque site des informations relatives à la configuration existante (dans la colonne CNF_EXI), des informations relatives à la configuration candidate (dans la colonne CF_CNDi). Elle présente aussi dans une colonne suivante (OUT_SET) les taux d'évolution de trois indicateurs de performances obtenus prédits par le module d'intelligence artificielle. Il s'agit ici des trois KPIs présentés ci-dessus. Le tableau comprend ensuite une colonne relative à un score SC affecté à chaque configuration candidate à partir des taux d'évolution de la colonne précédente et de critères de priorisation CP. Elle comprend enfin une colonne PRIO comprenant un ordre de classement de chaque site déduit du score SC obtenu par chaque site. Dans cet exemple, le site classé en premier est celui qui a obtenu le score le plus élevé.

Ainsi, l'opérateur du réseau mobile RM peut s'appuyer sur ce tableau pour décider des déploiements les plus pertinents à mettre en oeuvre.

On présente enfin, en relation avec la figure 11, un exemple de structure matérielle d'un dispositif 100 d'évaluation d'au moins une configuration candidate d'un équipement d'accès radio d'un réseau de communication, ledit dispositif comprenant un module d'obtention de données, dites historiques, relatives audit réseau dans une zone géographique comprenant un emplacement géographique de l'équipement d'accès radio, dit site, lesdites données historiques comprenant au moins des informations topographiques relatives à des sites existants dans ladite zone géographiques avant le déploiement, et des mesures d'au moins un indicateur de performance du réseau de communication dans la zone géographique pendant une période temporelle écoulée, dite période de référence, et un module de détermination d'une métrique d'évaluation dudit déploiement candidat, ou score, en fonction d'une variation dudit au moins un indicateur de performances du réseau de communication dans ladite zone géographique, induite par ledit déploiement et d'au moins un critère de priorisation associé à une métrique représentative d'une évolution d'une performance du réseau induite par ledit déploiement, ladite variation étant prédite à partir des données historiques et d'informations topographiques relatives à la configuration candidate.

Avantageusement, le dispositif 100 comprend en outre un module de prédiction de la variation dudit au moins un indicateur de performance du site suite au déploiement, à partir d'un modèle de prédiction préalablement appris, ledit modèle de prédiction étant mis en oeuvre par un module d'intelligence artificielle configuré pour recevoir en entrée les données historiques et les informations topographiques du déploiement candidat et produire la variation dudit au moins un indicateur de performance en sortie, le score étant obtenu par application dudit au moins un critère de priorisation à la variation prédite.

Avantageusement, le dispositif 100 comprend un module d'obtention de données externes dans la zone géographique comprenant des données démographiques et cartographiques de la zone géographique, un module de modélisation d'une zone géographique desservie par ledit au moins un site, dite zone de couverture radio (ZC), à partir desdites données réseau historiques et des données externes (DEXT) historiques.

Avantageusement, le dispositif 100 comprend un module de construction, à partir des données externes historiques obtenues dans la zone de couverture radio, d'une deuxième table de données, dite de tissu urbain de la zone de couverture du site.

Avantageusement, le dispositif 100 est configuré pour évaluer une pluralité de configurations candidates et comprend un module de classement de la pluralité de déploiements en fonction des scores déterminés.

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions.

Plus généralement, un tel dispositif 100 comprend une mémoire vive 103 (par exemple une mémoire RAM), une unité de traitement 102 équipée par exemple d'un processeur, et pilotée par un programme d'ordinateur Pg1, représentatif des modules d'obtention, de prédiction et de décision, stocké dans une mémoire morte 101 (par exemple une mémoire ROM ou un disque dur). A l'initialisation, les instructions de code du programme d'ordinateur sont par exemple chargées dans la mémoire vive 103 avant d'être exécutées par le processeur de l'unité de traitement 102. La mémoire vive 103 peut aussi contenir par exemple les informations démographiques et cartographiques obtenues, les informations historiques relatives au réseau, le modèle de prédiction appris, le score déterminé etc.

La figure 11 illustre seulement une manière particulière, parmi plusieurs possibles, de réaliser le dispositif 100 afin qu'il effectue les étapes du procédé tel que détaillé ci-dessus, en relation avec les figures 2, 3, 8 et 9, dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 100 est réalisé avec une machine de calcul reprogrammable, le programme correspondant (c'est-à-dire la séquence d'instructions) pourra être stocké dans un médium de stockage amovible (tel que par exemple une carte SD, une clé USB, un CD-ROM ou un DVD-ROM) ou non, ce médium de stockage étant lisible partiellement ou totalement par un ordinateur ou un processeur.

Les différents modes de réalisation ont été décrits ci-avant en relation avec un dispositif 100 intégré dans un équipement de gestion d'un réseau de télécommunications mobiles.

L'invention qui vient d'être décrite présente de nombreux avantages. Elle propose en effet une méthode d'évaluation des déploiements de configurations candidates de ressource d'accès radio sur des sites existants ou de nouveaux sites d'un réseau de communication. Cette méthode est basée sur un calcul d'indicateurs d'évolution du réseau en limitant les effets de saisonnalité, l'entraînement de modèles de prédiction pour apprendre à prédire ces indicateurs en se basant sur des données réseaux, cartographiques et socio-économiques. Elle est utilisable par les équipes techniques et/ou geomarketing d'un opérateur pour arbitrer et prioriser les emplacements de nouveaux déploiements en fonction de l'impact positif ou négatif prédit.

**Revendications**

1. Procédé d'évaluation d'un déploiement d'une configuration candidate, d'au moins un équipement d'accès radio d'un réseau de communication (RM, RAN) au niveau d'un emplacement, dit site, dans une zone géographique (ZG) **caractérisé en ce qu'**il comprend :

   - l'obtention (21) de données réseau, dites historiques, relatives à audit réseau dans la zone géographique (ZG) , lesdites données historiques comprenant au moins des informations topographiques relatives à des équipements d'accès radio existants dans ladite zone géographiques avant le déploiement de la configuration candidate au niveau d'emplacements, dits sites (ST1-ST5), et des mesures d'au moins un indicateur de performance (KPI) du réseau de communication (RM, RAN) dans la zone géographique (ZG) pendant une période temporelle écoulée, dite période de référence; et
   - la prédiction (23) d'une variation (D_KPI) dudit au moins un indicateur de performance(KPI) du réseau de communication (RM, RAN) dans ladite zone géographique (ZG), induite par ledit déploiement, ladite variation (D_KPI) étant prédite au moins à partir des données réseau historiques et d'informations topographiques (I_CND) relatives à la configuration candidate, et à partir d'un modèle de prédiction (MOD) préalablement appris, ledit modèle de prédiction étant mis en oeuvre par un module d'intelligence artificielle (MIA) configuré pour recevoir comme données d'entrée (INP_SET) les données réseau historiques et les informations topographiques de la configuration candidate et produire comme données de sortie (OUT_SET) la variation (D_KPI) dudit au moins un indicateur de performance.

2. Procédé d'évaluation selon la revendication précédente, **caractérisé en ce qu'**il comprend :

   - la détermination (24) d'une métrique d'évaluation de la configuration candidate, ou score (SC), en fonction de ladite variation (D_KPI) et d'au moins un critère de priorisation associé à une métrique représentative d'une évolution d'une performance du réseau induite par ledit déploiement,,
   le score (SC) étant obtenu par application dudit au moins un critère de priorisation à la variation (D_KPI) de l'indicateur de performance prédite.

3. Procédé selon une des revendications précédentes, **caractérisé en ce qu'**il comprend :

   - la construction (82) à partir des données réseau historiques, d'une table de données, dite de performances du réseau dans la zone géographique (T_KPI_H) ;
   - La construction (85) d'une table de données d'entrées (INP_SET) destinées à être présentées audit module d'intelligence artificielle (MIA), à partir de la table de performances, des données topographiques (I_CND) relatives à la configuration candidate et de données externes historiques comprenant des données démographiques et cartographiques de la zone géographique (ZG) ;
   une table de données de sortie (OUT_SET) étant produite (86) par le module d'intelligence artificielle (MIA), comprenant au moins des valeurs prédites de la variation dudit au moins un indicateur de performance du site induite par le déploiement de la configuration candidate.

4. Procédé selon la revendication précédente, **caractérisé en ce qu'**il comprend :

   - l'obtention (22) des données externes historiques ; et
   - la modélisation (83) d'une zone géographique desservie par ledit au moins un site (ST1-ST5), dite zone de couverture radio (ZC), à partir desdites données réseau historiques et des données externes (DEXT) historiques, la zone de couverture radio dudit au moins un site étant prise en compte pour la détermination (24) d'une évaluation du déploiement de la configuration candidate.

5. Procédé selon la revendication précédente, **caractérisé en ce qu'**il comprend la construction (84), à partir des données externes historiques obtenues dans la zone de couverture radio, d'une deuxième table de données, dite de tissu urbain (TB_TU_H) de la zone de couverture du site,
   ladite table de données d'entrées (INP_SET) étant construite par fusion de la table de performances, des données topographiques (I_CND) relatives à la configuration candidate et de la table de tissu urbain (TB_TU_H).

6. Procédé selon l'une quelconque des revendications précédentes, **caractérisé en ce qu'**il comprend, dans une phase préalable :

   - l'obtention (31) de données réseau d'apprentissage, relatives à au moins un site d'un réseau de communication dans une zone géographique, pendant une période temporelle écoulée, dite période d'apprentissage, au cours de laquelle au moins une nouvelle configuration a été déployée sur ledit au moins un site, lesdites données réseau d'apprentissage comprenant au moins des informations topographiques relatives à une configuration précédente et à la nouvelle configuration dudit au moins un site et des mesures d'au moins un indicateur de performance (KPI) du site;
   - la construction (33) à partir des données réseau d'apprentissage, d'une première table de données, dite table d'évolution des performances (TB_KPI_EV) du site avant et après le déploiement de ladite au moins une nouvelle configuration ;
   - l'obtention (32) de données externes d'apprentissage comprenant des données démographiques et cartographiques de la zone géographique, pour la période d'apprentissage ;
   - la modélisation (34) d'une zone géographique d'une zone géographique desservie par ledit au moins un site, dite zone de couverture radio d'apprentissage, à partir desdites données réseaux d'apprentissage ;
   - ILa construction (35), à partir des données externes d'apprentissage dans la zone de couverture radio d'apprentissage, d'une deuxième table de données (TB_TU), dite table de tissu urbain d'apprentissage de la zone de couverture du site ;
- la construction (36) d'un premier ensemble de données d'apprentissage par fusion de la table d'évolution des performances et de la table de tissu urbain d'apprentissage ; et
- l'entraînement (37) du module d'intelligence artificielle (MIA) à partir du premier ensemble d'apprentissage, ledit modèle de prédiction (MOD) étant obtenu.

7. Procédé selon la revendication précédente, **caractérisé en ce que** la période d'apprentissage comprend au moins une première période de comparaison, une période de déploiement postérieure à la première période et une deuxième période de comparaison postérieure à la période de déploiement et **en ce que** la construction de la table d'évolution des performances comprend une comparaison des valeurs dudit au moins un indicateur de performance obtenues pendant la première et la deuxième périodes de comparaison.

8. Procédé selon la revendication précédente, **caractérisé en ce qu'**il comprend

- la construction d'un deuxième ensemble de données d'apprentissage, dit ensemble témoin, obtenu à partir de données réseau d'apprentissage pour au moins un autre site du réseau ou d'un autre réseau appartenant à la même zone géographique et pour lequel aucune nouvelle configuration n'a été déployée pendant la période d'apprentissage, et **en ce que** ledit module d'intelligence artificielle est entraîné à partir du premier et du deuxième ensembles de données d'apprentissage.

9. Procédé selon l'une quelconque des revendications 2 à 8 **caractérisé en ce qu'**il est mis en oeuvre pour une pluralité de de configurations candidates dans ledit réseau de communication (RM, RAN) et **en ce qu'**il comprend en outre le classement (25) de la pluralité de déploiements en fonction des scores déterminés.

10. Procédé selon l'une quelconque des revendications précédentes, **caractérisé en ce que**, ledit site comprenant au moins une cellule radio configurée pour émettre et recevoir des ondes radio à une fréquence donnée dans au moins un secteur donné, ladite au moins une configuration candidate appartient à un groupe comprenant au moins :

- l'ajout d'une cellule radio associée à une fréquence distincte des fréquences existantes sur ledit site ;
- l'ajout d'un secteur d'émission à une cellule radio existante,
- le remplacement d'une cellule radio existante associée à une première fréquence par une nouvelle cellule radio associée à une deuxième fréquence distincte de la première,
- le remplacement d'une cellule radio associée à une première technologie par une cellule radio associée à une deuxième technologie.

11. Dispositif (100) d'évaluation d'un déploiement d'une configuration candidate, d'au moins un équipement d'accès radio d'un réseau de communication (RM, RAN) au niveau d'un emplacement, dit site, dans une zone géographique (ZG), **caractérisé en ce qu'**il est configuré pour mettre en oeuvre :

- l'obtention de données réseau, dites historiques, relatives à audit réseau dans la zone géographique (ZG) , lesdites données historiques comprenant au moins des informations topographiques relatives à des équipements d'accès radio existants dans ladite zone géographiques avant le déploiement de la configuration candidate au niveau d'emplacements, dits sites (ST1-ST5), et des mesures d'au moins un indicateur de performance (KPI) du réseau de communication (RM, RAN) dans la zone géographique (ZG) pendant une période temporelle écoulée, dite période de référence; et
- la prédiction (23) d'une variation (D_KPI) dudit au moins un indicateur de performance (KPI) du réseau de communication dans ladite zone géographique (ZG), induite par ledit déploiement, ladite variation étant prédite au moins à partir des données réseau historiques et d'informations topographiques (I_CND) relatives à la configuration candidate, et à partir d'un modèle de prédiction (MOD) préalablement appris, ledit modèle de prédiction étant mis en oeuvre par un module d'intelligence artificielle (MIA) configuré pour recevoir comme données d'entrée (INP_SET) les données réseau historiques et les informations topographiques de la configuration candidate et produire comme données de sortie (OUT_SET) la variation (D_KPI) dudit au moins un indicateur de performance .

12. Système (S) de gestion d'un réseau de télécommunications, **caractérisé en ce qu'**il comprend un dispositif (100) d'évaluation d'un déploiement d'une configuration candidate d'un équipement d'accès radio d'un réseau de communication (RM, RAN) selon la revendication 11.

**13.** Programme d'ordinateur comprenant des instructions de code de programme pour la mise en oeuvre d'un procédé selon l'une des revendications 1 à 10, lorsqu'il est exécuté par un processeur.

Fig. 1

20 ☐ OBT. I_CND

21 ☐ OBT. DRH

22 ☐ OBT. DEXT

MOD

23 ☐ PRD. D_KPI ⟷ MIA

24 ☐ DET. SC ← CP

_Fig. 2_

SPLG

SPLGA

PLG

_Fig. 6_

D_LRN

Fig. 3

KPI$_{Avt}$

2021-01-04  2021-02-04

| Jan | Feb | Mar | Apr | May | Jun | Jul | Aug | Sep | Oct | Nov | Dec | Jan | Feb |

KPI$_{Aps}$

2022-01-03  2022-02-03

M$_{N-1}$  DP  M$_N$

2021-02-05  2022-01-02

Fig. 4

TRN

X_TRN → MOD → Y_TRN

Y_TRN

MIA

Fig. 7A

TST

X_TST → MOD → Y_TST

Y_TST

MIA

Fig. 7B

G

PLG

Fig. 5

μP                    102

Pg1          RAM     103

101

100

Fig. 11

DRH
(21)

80

OBT. KPI_PRC,
I_TPO (RAN)

81

OBT. DEXT (ZG)

83

MDL ZC

82

20

OBT. I_CND

BLD. TB_KPI_H

BLD. TB_TU_H

84

85

BLD. INP_SET

86

PRD. KPI_PST

OUT_SET

Fig. 8

OBT. I_CNDi — 20

OBT. DRH — 21

OBT. DEXT — 22

PRD. D_KPI — 23

i+1

DET. SC(CNDi) — 24

ORD. SC(CNDi) — 25

DEC. — 26

Fig. 9

30

| STi | CNF_EXi | CNF_CNDi | OUT_SET | SC(CNDi) | PRIO |
|-----|---------|----------|---------|----------|------|
| ST1 | {800, 1800, 2600} | {2100} | {+1%, +2%, +5%} | 1.5 | 1 |
| ST2 | {800} | {2100} | {+10%} | 1.25 | 2 |
| ST3 | {1800} | {2100} | {-2%} | 0.75 | 5 |
| ST4 | {1800, 2600} | {2100} | {-7%, +6%} | 1 | 3 |
| ST5 | {800, 1800} | {2100} | {0%, -2%} | 0.75 | 4 |

Fig. 10

Europäisches
Patentamt

European
Patent Office

Office européen
des brevets

# RAPPORT DE RECHERCHE EUROPEENNE

Numéro de la demande

**EP 23 20 6236**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Ben Sana Sana ET AL: "D5.1 SEMAFOUR Integrated SON Management Requirements and Basic Concepts", , 13 décembre 2013 (2013-12-13), XP055158831, Extrait de l'Internet: URL:http://fp7-semafour.eu/media/cms_page_media/10/SEMAFOUR_D5.1_IntegratedSONManagement_Basics_Requirements_v1.0.pdf [extrait le 2014-12-16] * pages 2,4,5 * * pages 7-50 * ----- | 1-13 | INV. H04W16/18 H04W4/02 ADD. H04W24/02 |
| X | CN 114 154 765 A (CHINESE JOINT NETWORK COMMUNICATION GROUP LTD COMPANY) 8 mars 2022 (2022-03-08) * le document en entier * ----- | 1-13 | |
| A | TOBIAS BANDH ET AL: "Policy-based coordination and management of SON functions", INTEGRATED NETWORK MANAGEMENT (IM), 2011 IFIP/IEEE INTERNATIONAL SYMPOSIUM ON, IEEE, 23 mai 2011 (2011-05-23), pages 827-840, XP032035329, DOI: 10.1109/INM.2011.5990492 ISBN: 978-1-4244-9219-0 * pages 828-840 * ----- | 1-13 | **DOMAINES TECHNIQUES RECHERCHES (IPC)** H04W |

Le présent rapport a été établi pour toutes les revendications

| Lieu de la recherche | Date d'achèvement de la recherche | Examinateur |
|---|---|---|
| Berlin | 20 février 2024 | Binger, Bernard |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 23 20 6236

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-02-2024

| Document brevet cité au rapport de recherche | Date de publication | Membre(s) de la famille de brevet(s) | Date de publication |
|---|---|---|---|
| CN 114154765 A | 08-03-2022 | AUCUN | |

Pour tout renseignement concernant cette annexe : voir Journal Officiel de l'Office européen des brevets, No.12/82